(19) Europäisches Patentamt / European Patent Office / Office européen des brevets

(11) **EP 2 570 785 B1**

(12) **EUROPEAN PATENT SPECIFICATION**

(45) Date of publication and mention
of the grant of the patent:
**15.05.2019 Bulletin 2019/20**

(51) Int Cl.:
*G01J 3/51* *(2006.01)*     *G01M 11/00* *(2006.01)*
*G01J 3/02* *(2006.01)*     *G01J 1/02* *(2006.01)*
*G01J 3/50* *(2006.01)*

(21) Application number: **11780332.0**

(22) Date of filing: **15.03.2011**

(86) International application number:
**PCT/JP2011/001501**

(87) International publication number:
**WO 2011/142071 (17.11.2011 Gazette 2011/46)**

(54) **MEASURING OPTICAL SYSTEM, AND LUMINANCE METER, COLOR LUMINANCE METER, AND COLORIMETER USING THE SAME**

OPTISCHES MESSSYSTEM, UND LEUCHTKRAFTMESSGERÄT, FARBLEUCHTKRAFTMESSGERÄT UND FARBMESSGERÄT MIT DEM OPTISCHEN SYSTEM

SYSTÈME OPTIQUE DE MESURE, ET LUMINANCEMÈTRE, LUMINANCEMÈTRE COULEUR ET COLORIMÈTRE UTILISANT CE SYSTÈME OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2010 JP 2010112186**

(43) Date of publication of application:
**20.03.2013 Bulletin 2013/12**

(73) Proprietor: **Konica Minolta Optics, Inc.**
**Saka-shi, Osaka 590-8551 (JP)**

(72) Inventor: **TSURUTANI, Katsutoshi**
**Osaka 590-8551 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| **EP-A1- 2 562 520** | **WO-A1-03/091676** |
| **WO-A2-2009/013718** | **JP-A- 5 026 732** |
| **JP-A- 6 273 232** | **JP-A- 2006 189 445** |
| **JP-A- 2010 002 255** | **JP-A- 2010 002 255** |
| **US-A- 3 864 018** | **US-B1- 6 246 479** |

## Description

TECHNICAL FIELD

The present invention relates to a luminance meter or a color luminance meter for receiving light emitted from a light source such as a liquid crystal monitor and a lamp to measure a luminance (Lv) and a chromaticity (x, y) of the light source; as well as a measuring probe for use, for example, in a colorimeter for receiving light emitted onto and then reflected by a measuring object to measure a reflectance and a chromaticity (Lab, etc.) of the measuring object, and a luminance meter, a color luminance meter and a colorimeter each using the measuring optical system.

BACKGROUND ART

A color luminance meter for measuring a luminance (Lv) and a chromaticity (x, y) of a liquid crystal monitor is configured by equipping it, for example, with a measuring probe disposed opposed to a display screen of the liquid crystal monitor, and a main meter unit. The measuring probe is operable to measure, for example, tristimulus values of X, Y, Z color-matching functions defined by the CIE (International Commission on Illumination), by respective sensors, and the main meter unit is operable, based on a result of the measurement, to calculate a luminance and a chromaticity of the display screen 3 as a measuring object.

A typical conventional technique related to a measuring optical system for use in such a color luminance meter or a colorimeter is disclosed, for example, in the following Patent Document 1. In the Patent Document 1, a bundle fiber is employed to introduce incident light into three colorimetric optical systems corresponding to respective ones of the tristimulus values. Each of the colorimetric optical systems is configured by combining a color filter corresponding to a respective one of the tristimulus values, with a light-receiving sensor, wherein each of the color filters of the colorimetric optical systems is disposed at a respective one of three branched exit end of the bundle fiber. The bundle fiber of the Patent Document 1 is comprised of a plural number n (n = several hundreds to several thousands) of fiber strands with a small diameter ($\phi$ = about 0.03 to 0.3 mm), and formed such that the fiber strands are bundled together on an inlet end (inlet) side thereof, and randomly branched into two or more sub-bundles (e.g., three sub-bundles corresponding to the tri-stimulus values X, Y, Z) each consisting of a plural number m of the fiber strands, on an exit end (exit) side thereof. Each of the inlet and exit sides may have an arbitrary shape (such as a circular shape or a rectangular shape).

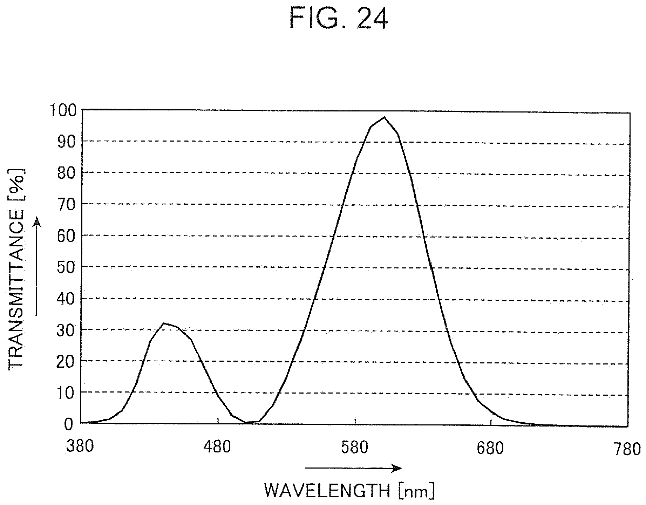

However, each of the color filters is configured by laminating a plurality of optical absorption filters in such a manner as to transmit incident light at a transmittance corresponding to a respective one of a plurality of desired spectral characteristics such as the tristimulus values X, Y, Z, so that there is a problem that it is impossible to design a filter having a characteristic with transmittance peaks in two wavelength bands, as illustrated, for example, in FIG. 24, in other words, design freedom or flexibility is limited. There is another problem of low transmittance and large light intensity loss. Particularly, in a film-shaped color filter, there is yet another problem of severe aged deterioration due to (poor stability against) heat, light (ultraviolet light), temperature, etc.

Therefore, a conventional technique intended to employ, as each of the color filters, an interference type filter (hereinafter referred to as "interference filter") in place of the optical absorption filter is proposed, for example, in the following Patent Document 2. This interference filter is configured by laminating several tens of dielectric layers or oxide layers on a glass substrate through vacuum deposition, sputtering or other process, and operable to select a transmission/reflection wavelength by the action of optical interference. Accordingly, the interference filter is easy to obtain a desired transmittance (easy to design or excellent in design flexibility) as compared to the optical absorption filter, so that it can be formed as a filter (as illustrated in FIG. 24) having two peaks (vertexes) as in the X color-matching function. In addition, the interference filter has a high transmittance. For example, a peak transmittance is 50% or less in the absorption type filter, whereas it is close to 100% in the interference filter. The interference filter further has an advantage that it is excellent in reliability (small in a temporal change in transmittance due to temperature, humidity and exposure to light).

However, in the interference filter, a transmittance thereof varies depending on incident angles. Thus, there is a problem that, in the case of 0-degrees incidence of parallel light, error sensitivity is high. Patent document 3 is further prior art.

LIST OF PRIOR ART DOCUMENTS

PATENT DOCUMENTS

Patent Document 1 : JP 2003-247891 A
Patent Document 2: JP 2010-002255 A
Patent Document 3: US 6,246,479 B1

SUMMARY OF THE INVENTION

The present invention has been made in view of the above circumstances, and its object is to provide a measuring optical system capable of employing an interference filter while reducing an influence of a deviation in transmittance characteristic thereof due to an incident angle, and a luminance meter, a color luminance meter and a colorimeter each using the measuring optical system.

A measuring probe, and a luminance meter, a color luminance meter and a colorimeter each incorporated with the measuring probe, according to the present invention, are defined in claims 1, 8, 9 and 10 , respectively. With this configuration, the inventive measuring probe, and the inventive luminance meter, the inventive color luminance meter and the inventive colorimeter each incorporated with the measuring probe are advantageous in reducing an influence of a deviation in the transmittance characteristic due to incident angles, even with use of the interference filter.

The above and other objects, features and advantages of the present invention will be apparent from the following detailed description and the accompanying drawings.

BRIEF DESCRIPTION OF THE DRAWINGS

FIG. 1 is a diagram illustrating an internal configuration of a measuring probe (illustrating a measuring optical system) of a color luminance meter according to one embodiment of the present invention.

FIG. 2 is a graph illustrating actual measurement data of an output angle from an optical fiber that has been conducted by the inventor of the present application.

FIG. 3 is a diagram for explaining a method of obtaining the data illustrated in FIG. 2.

FIG. 4 is a ray diagrams of an objective lens of the measuring probe illustrated in FIG. 1.

FIG. 5 is a diagram for explaining a method of measuring an intensity distribution of a light beam incident on an interference filter.

FIG. 6 is a graph illustrating one example of an intensity distribution of a light beam incident on the interference filter.

FIG. 7 is a graph illustrating a spectral intensity distribution of the interference filter.

FIG. 8 is a graph illustrating an intensity distribution depending on an incident angle onto the interference filter, and an influence of tilt of the filter:

FIG. 9 is a graph illustrating a transmittance distribution in the case where the interference filter is installed in an optical system having the incident angle-dependent intensity distribution illustrated in FIG. 8.

FIG. 10 is a graph illustrating a relationship between an incident angle onto the interference filter, and an error.

FIG. 11 is a graph illustrating an example of an intensity distribution depending on an output angle from a fiber.

FIG. 12 is a diagram schematically illustrating a bundle fiber and single fibers as opposed to each other.

FIG. 13 is a diagram illustrating an internal configuration of a measuring probe according to a second embodiment of the present invention.

FIG. 14 is a diagram illustrating an internal configuration of a measuring probe according to a third embodiment of the present invention.

FIG. 15 is a diagram illustrating an internal configuration of a measuring probe according to a fourth embodiment of the present invention.

FIG. 16 is a diagram illustrating an internal configuration of a measuring probe according to a fifth embodiment of the present invention.

FIG. 17 is a diagram for explaining a method of measuring a liquid crystal monitor by a color luminance meter.

FIG. 18 is a block diagram illustrating a schematic configuration of a measuring probe of a conventional luminance meter.

FIG. 19 is a block diagram illustrating a schematic configuration of a measuring probe of a color luminance meter and a colorimeter.

FIG. 20 is a diagram illustrating an internal configuration of a measuring probe (illustrating a measuring optical system) of a conventional color luminance meter.

FIG. 21 is a diagram for explaining a luminous intensity distribution of the liquid crystal monitor.

FIG. 22 is a graph illustrating one example of the luminous intensity distribution of the liquid crystal monitor.

FIG. 23 is a diagram illustrating a relationship between an arrangement of pixels for R, G and B and a measurement area in the liquid crystal monitor.

FIG. 24 is a graph illustrating one example of a spectral transmittance characteristic of the interference filter.

FIG. 25 is a graph illustrating a change in the spectral transmittance characteristic in response to a change in incident angle onto the interference filter.

FIG. 26 is a diagram for schematically explaining a configuration of an optical system, in which an interference filter is employed in the measuring optical system illustrated in FIG. 20, without using a collecting lens.

FIG. 27 is a diagram for schematically explaining a configuration of an optical system, in which an interference filter is employed in the measuring optical system illustrated in FIG. 20, and parallel light is incident onto a light-receiving sensor with use of a collecting lens.

FIG. 28 is a diagram for schematically explaining a configuration of an optical system, in which an interference filter is employed in the measuring optical system illustrated in FIG. 20, and an image is formed by a light-receiving sensor with use of a collecting lens.

FIG. 29 is a sectional view for explaining a state of light propagation within an optical fiber.

DESCRIPTION OF EMBODIMENTS

An embodiment of the present invention will hereinafter be described based on the drawings. In the figures, elements or components assigned with the same reference numeral or sign mean that they have the same configuration, and duplicated description thereof will be appropriately omitted. Further, in this specification, a collective term will be denoted by a reference numeral or sign from which a suffix is omitted, and a term indicative of an individual element or component will be denoted by a reference numeral or sign with a suffix.

(Comparative Examples)

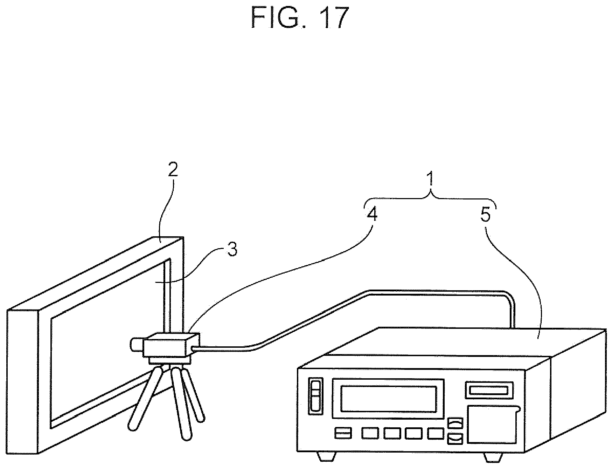

First of all, in order to explain functions and effects of this embodiment, a comparative example will be described below. FIG. 17 is a diagram for explaining a state of measurement of luminance (Lv) and chromaticity (x, y) of a liquid crystal monitor 2 using a color luminance meter 1. This color luminance meter 1 is configured by equipping it with a measuring probe 4 disposed opposed to a display screen 3 of the liquid crystal monitor 2, and a main meter unit 5. The measuring probe 4 is operable to measure, for example, tristimulus values of X, Y, Z color-matching functions defined by the CIE, by respective sensors, and the main meter unit 5 is operable, based on a result of the measurement, to calculate a luminance and a chromaticity of the display screen 3 as a measuring object.

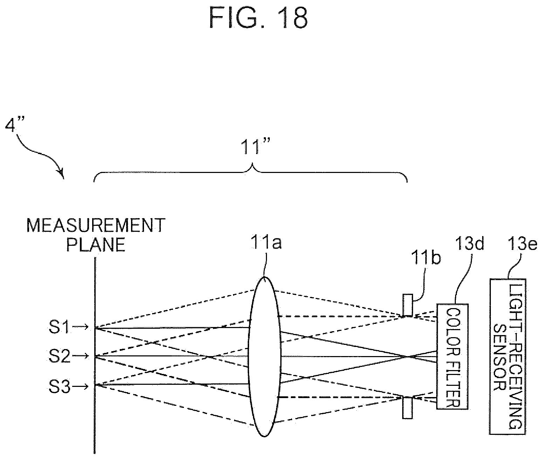

A schematic configuration of a measuring probe 4 is as illustrated, for example, in FIG. 18. Specifically, the measuring probe 4" is configured to receive output light from the display screen 3 as a measuring object by an objective optical system 11", and the light is incident onto a light-receiving sensor 13e through a color filter 13d. The objective optical system 11" is configured using a convex lens 11a having a positive optical power (refractive power), and an aperture stop 11b is provided at a focus position of the convex lens 11a.

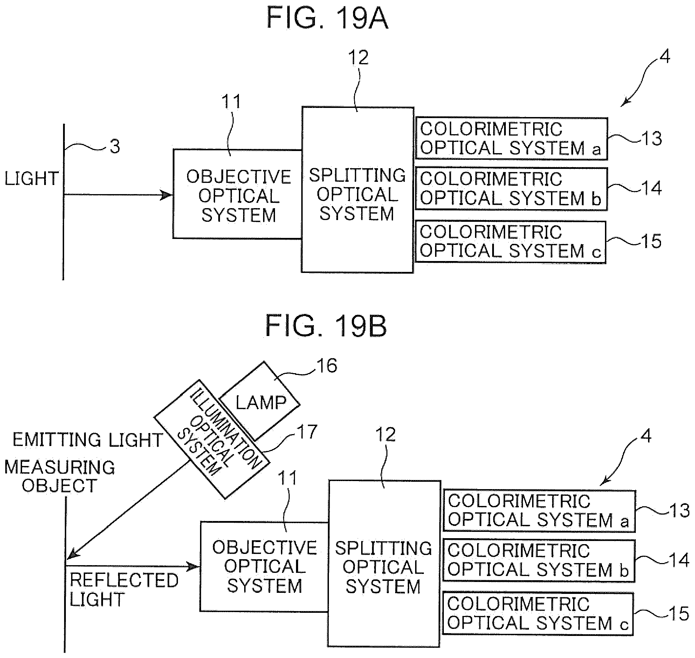

On the other hand, the schematic internal configuration of a measuring probe 4 of a color luminance meter 1 is as illustrated in e.g. FIG. 19A. Specifically, the measuring probe 4 is configured such that an objective optical system 11 receives light output from the display screen 3 as a measuring object to extract a component thereof incident at a prescribed angle, e.g., within ± 2.5 degrees with respect to a normal line to the display screen 3, and to allow incidence of the extracted component onto a splitting optical system 12, wherein the component is split into three, and the split components are introduced, respectively, into three colorimetric optical systems 13, 14, 15 corresponding to tristimulus values of X, Y, Z color-matching functions for measuring an intensity of the incident light.

Further, in a colorimeter for measuring a reflectance and a chromaticity (Lab, etc.) of the measuring object, in addition to the configuration of the measuring probe 4 illustrated in FIG. 19A, a lamp 16 as a light source and an illumination optical system 17 are further provided, as illustrated, for example, in FIG. 19B. Light is emitted from the lamp 16 and the illumination optical system 17 onto the measuring object, and resulting reflected light is measured by the measuring probe 4.

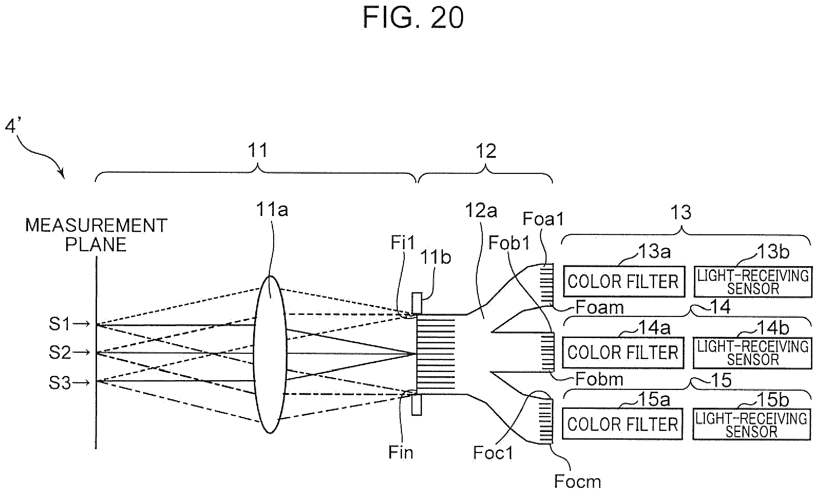

A typical technique related to a measuring optical system for use in such a color luminance meter or colorimeter is disclosed in the Patent Document 1. FIG. 20 is a diagram illustrating an internal configuration of a measuring probe 4' in the technique. In this technique, the measuring probe 4' is provided with an objective optical system 11, a splitting optical system 12 and a colorimetric optical system 13. A convex lens 11a having a positive power is used for the objective optical system 11, and a bundle fiber 12a is used for the splitting optical system 12. The bundle fiber 12a is comprised of a plural number n (n = several hundreds to several thousands) of fiber strands with a small diameter ($\phi$ = about 0.03 to 0.3 mm), and formed such that the fiber strands are bundled together on an inlet end (inlet) side thereof, and randomly branched into two or more sub-bundles (e.g., three sub-bundles corresponding to the tri-stimulus values X, Y, Z) each consisting of a plural number m of the fiber strands, on an exit end (exit) side thereof. Each of the inlet and exit sides may have an arbitrary shape (such as a circular shape or a rectangular shape).

In the measuring probe 4', the aperture stop 11b is disposed at a position of a back focal point of the convex lens 11a so as to capture a component within ± 2.5 degrees with respect to the normal line of the display screen 3 as mentioned above, i.e., in a front telecentric optical configuration. The inlet end (Fi1 to Fin) of the bundle fiber 12a faces a plane of the aperture stop 11b. Each of the colorimetric optical systems 13, 14, 15 comprises a color filter 13a (14a, 15a) corresponding to a respective one of the tri-stimulus values X, Y, Z, and a light-receiving sensor 13b (14b, 15b) in combination therewith.

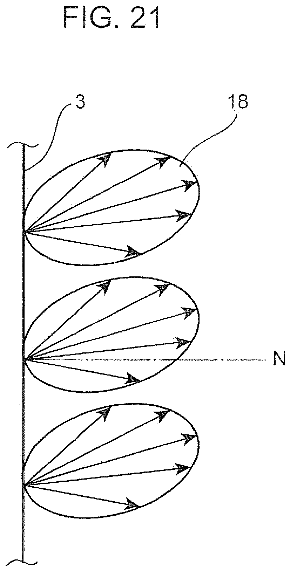

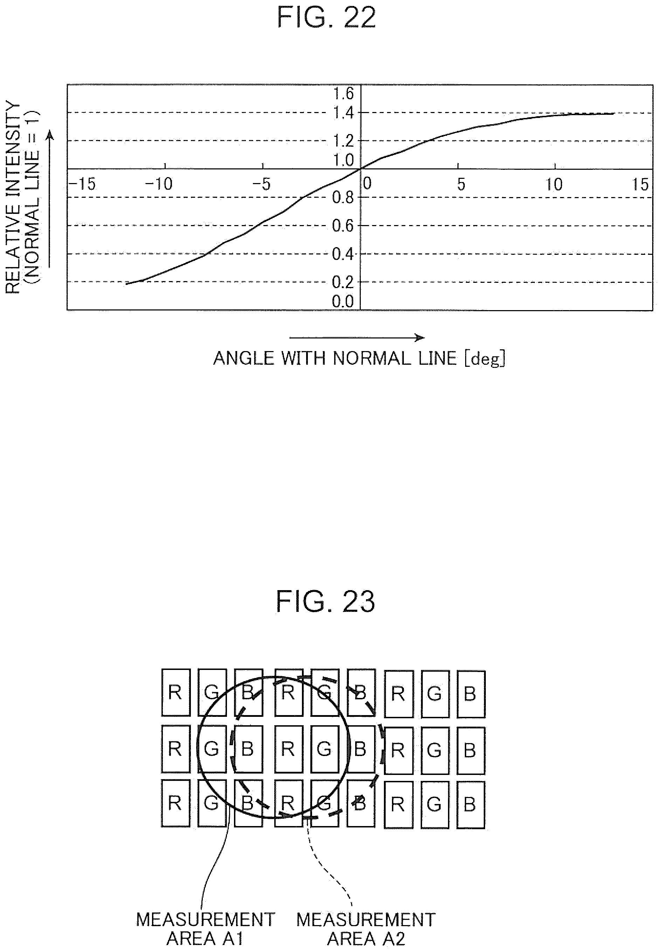

Meanwhile, for example, in a liquid crystal monitor, a first characteristic of a measuring object is that a luminous intensity distribution of the measuring object has directivity. That is, an intensity of emitted light varies depending on an angle with respect to the normal line of the display screen 3, and, in some cases, can be asymmetric with respect to the normal line. For example, in monitors for notebook computers and portable phones, some of them are designed to intentionally strengthen directivity, and it is often the case that a user peers down at the monitor of the notebook computer obliquely from thereabove. For this reason, as illustrated in FIG. 21, the display screen 3 has a luminous intensity distribution 18 in which a luminous intensity becomes higher on an upper side and becomes lower on a lower side, with respect to a normal line N. FIG. 22 specifically illustrates one example of such a luminous intensity distribution.

Further, in the liquid crystal monitor, an emission intensity varies depending on a measurement position (unevenness in intensity occurs). This phenomenon occurs due to a positional relationship between a backlight and/or an array of RGB filters, and the measuring probe 4. FIG. 23 illustrates a relationship between an array of R, G and B pixels of a liquid crystal monitor, and a measurement area. For example, with a focus on a central row, two G pixels, one R pixel and one B pixel are included in a measurement area A1 indicated by the solid line, whereas two B pixels, one R pixel and one G pixel are included in a measurement area A2 indicated by the broken line which is shifted from the measurement area A1 by one pixel in a row direction of the pixels. Such unevenness in intensity is significant in the case where the measurement area is small (for example, $\phi = 5$ mm or less).

Furthermore, the measuring object (liquid crystal monitor) has an asymmetric characteristic, and, on the other hand, a measuring instrument is required to provide stable measurement results. In other words, it is necessary that a measurement result is not changed even when the measuring probe 4 is rotated about an optical axis (no rotation-induced error occurs). This phenomenon occurs not only in measurement for a liquid crystal monitor but in measurement for a glossy printed material or a coated surface with metallic or pearl paint, using a colorimeter for measuring reflected light.

Therefore, in the Patent Document 1, the bundle fiber 12a is configured such that a plurality of fiber strands are circumferentially divided into six groups as viewed on the side of a plurality of inlet ends Fil to Fin thereof bundled in a circle, and diagonally located ones of the groups are bundled together. This facilitates the mitigation of measurement errors due to the above directivity (luminous intensity distribution characteristic).

However, each of the color filters 13a, 14a, 15a is configured by laminating a plurality of optical absorption filters in such a manner as to transmit incident light at a transmittance corresponding to a respective one of a plurality of desired spectral characteristics such as the tri-stimulus values X, Y, Z. Therefore, this configuration has a problem that it is unable to design a filter having two transmittance peaks in respective wavelength bands, as illustrated, for example, in FIG. 24, in other words, flexibility of filter design is limited. There is another problem of low transmittance and large light intensity loss. Particularly, in a film-shaped color filter, there is yet another problem of severe aged deterioration due to (poor stability against) heat, light (ultraviolet light), humidity, etc.

Therefore, a conventional technique intended to employ, as the color filters, an interference type filter (hereinafter referred to as "interference filter") in place of the optical absorption filter is proposed as described above, for example, in the Patent Document 2. This interference filter is configured by laminating several tens of dielectric layers or oxide layers on a glass substrate through vacuum deposition, sputtering or other process, and operable to select a transmission/reflection wavelength by the action of optical interference. Thus, the interference filter is easy to obtain a desired transmittance (easy to design or excellent in design flexibility) as compared to the optical absorption filter, so that it can be formed as a filter (as illustrated in FIG. 24) having two peaks (vertexes) as in the X color-matching function. In addition, the interference filter has a high transmittance. For example, a peak transmittance is 50% or less in the absorption type filter, whereas it is close to 100% in the interference filter. The interference filter further has an advantage that it is excellent in reliability (small in a temporal change in transmittance due to temperature, humidity and exposure to light).

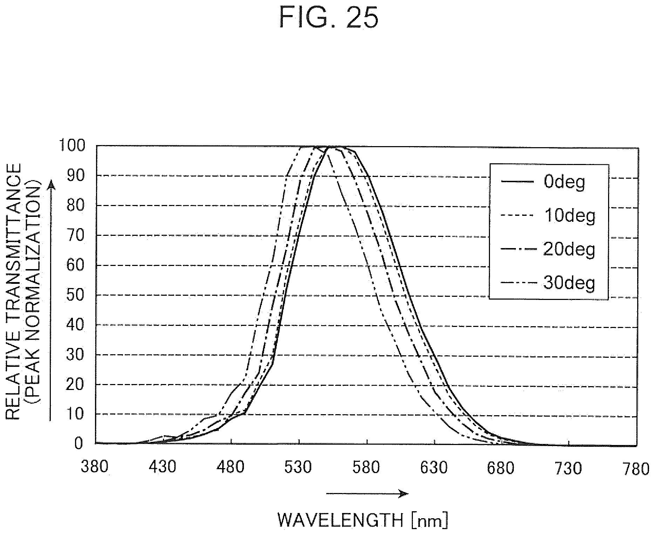

However, in the interference filter, a transmittance thereof varies depending on incident angles. Thus, the interference filter has a problem that, in the case of 0-degree incidence of parallel light, error sensitivity is high, which lead to a disadvantage that an optical system for allowing incidence of parallel light becomes complicated. FIG. 25 illustrates a relationship between an incident angle of light onto the interference filter, and a transmittance. In the case of the 0-degree incidence, as the incident angle is largely deviated from the normal line of the interference filter, a transmittable wavelength band shifts toward a shorter-wavelength side. Consequently, a transmittance characteristic will vary just by a slight inclination due to error in positional relationship between related components.

Therefore, a requirement for the interference filter is that an intensity distribution with respect to incident angles is kept stable, and each of the incident angles does not have unique information (each of the incident angles needs to have uniformized (normalized) information). Thus, in order to meet this requirement, in the Patent Document 2, the objective lens system 11 is provided with two lenses and an aperture stop disposed therebetween, and configured such that an incident angle at the inlet end (Fil to Fin) of the bundle fiber 12a becomes less than an incident angle to the aperture stop. Thus, the Patent Document 2 reduces divergence of incident angles from the bundle fiber 12a onto the interference filter to compensate the disadvantage of the interference filter.

In order to allow a component within ± 2.5 degrees with respect to the normal line of the display screen 3 to be extracted and introduced into the splitting optical system 12 as described above, the objective lens system 11 is laid out in a front telecentric optical arrangement. Thus, due to information associated with each of the fiber strands and information associated with incident angles onto each of the fiber strands, it is still difficult to uniformize incident light onto the color filters 13a, 14a and 15a. The reason will be described in detail below.

Firstly, as the information associated with each of the fiber strands, an emission angle (directivity) from a measurement plane is correlated with each of the fiber strands. Specifically, as mentioned above in connection with FIG. 20, light emitted upwardly from the measurement plane (broken lines) is totally collected on the inlet end Fi1 of an upper one of the fiber strands. Thus, if a large number of fiber strands are randomly arranged at the three sub-bundles of exit ends (Foa1 to Foam; Fob1 to Fobm; Foc1 to Focm) of the bundle fiber 12a, information about the directivity is uniformized. However, it is difficult to fabricate such a bundle fiber. Even if it is possible, a resulting bundle fiber cannot avoid high cost. It is practically impossible to figure out where each of the fiber strands is arranged on the side of the exit ends of the bundle fiber 12a, and the fiber strands are unevenly arranged (for example, information about directivity around 0 degree is concentrated on an outer periphery of the exit end of the fiber sub-bundle). Moreover, even in a plurality of measuring instruments of the same model, the uneven state varies individually.

Secondly, as for the information associated with incident angles onto each of the fiber strands, assuming that incident angles onto each of the fiber strands are correlated with respective positions in the measurement plane, as mentioned above (in FIG. 20, light emitted from S1 continually becomes incident on the fiber at constant angles), and a length of the fiber is sufficiently short, the following relation is satisfied: incident angle = ± output angle, so that information associated with the incident angles is kept in output angles (including the case where the sign is reversed), because light is transmitted through each of the fiber strands while repeatedly undergoing total reflection based on a difference in refraction index between a core and a clad of the fiber strand.

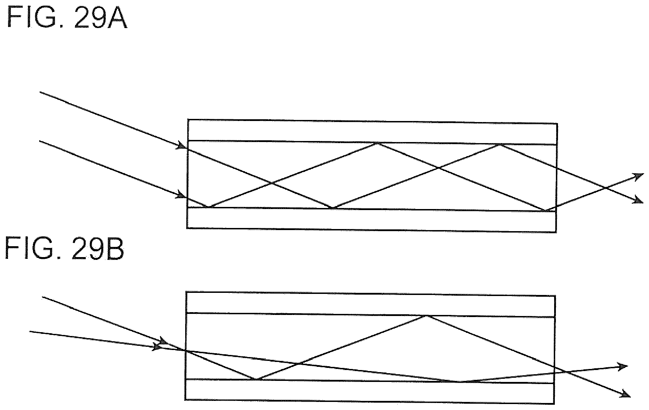

On the other hand, if the fiber has a certain level or more of length, the incident angles are randomly uniformized during transmission through the fiber (during a large number of times of reflections between the core and the clad), so that the problem with the incident angles is reliably solved as the fiber length becomes longer (as the number of times of reflection becomes larger). This is because, although an optical fiber is ideally operable to cause incident light to undergo total reflection based on a difference in refraction index between a core and a clad, as illustrated in FIG. 29A or FIG. 29B, output positions and output angles practically become random due to a local difference in refraction index (stria), a local difference in fiber diameter (thick, thin), or a curve of a reflection interface caused by bending of the fiber.

As above, when the fiber has a certain level or more of length, a diffusion effect similar to that of a diffusion plate can be obtained (a decrease in light intensity is less than that in the diffusion plate), so that incident light is uniformized and then output. Along with an increase in the fiber length, a distribution of the output angles comes closer to a numerical aperture (NA) specific to the fiber. In other words, incident light is output under the fiber-specific NA, regardless of incident angles onto the fiber. Therefore, the Patent Document 2 has a contradiction in this regard. Specifically, in order to reduce an output angle from a fiber (to reduce an incident angle onto each of the color filters 13a, 14a, 15a), it is necessary to form the bundle fiber using short fibers with a certain level or less of length. However, the short fibers cause an uneven distribution of information associated with incident angles onto the fiber, resulting in the occurrence of measurement error.

Further, it is necessary to receive all light beams under the same conditions (without relying on incident angles onto each of the interference filters). However, each of a plurality of light beams output from the bundle fiber 12a has specific information about the measuring object as described above, so that it is necessary to allow the light beams to pass through the color filters 13a, 14a, 15a under the same condition and without losing the information, and then received by the light-receiving sensors 13b, 14b, 15b. Assume that light is received in a situation where a part of the information is lost. In this case, when the measuring probe 4 is rotated as described above, resulting received data is changed in conjunctions with the rotation (rotation-induced error). Further, if conditions of the loss vary depending on measuring instruments, instrumental error occurs (a difference in measured result occurs among a plurality of measuring instruments of the same model).

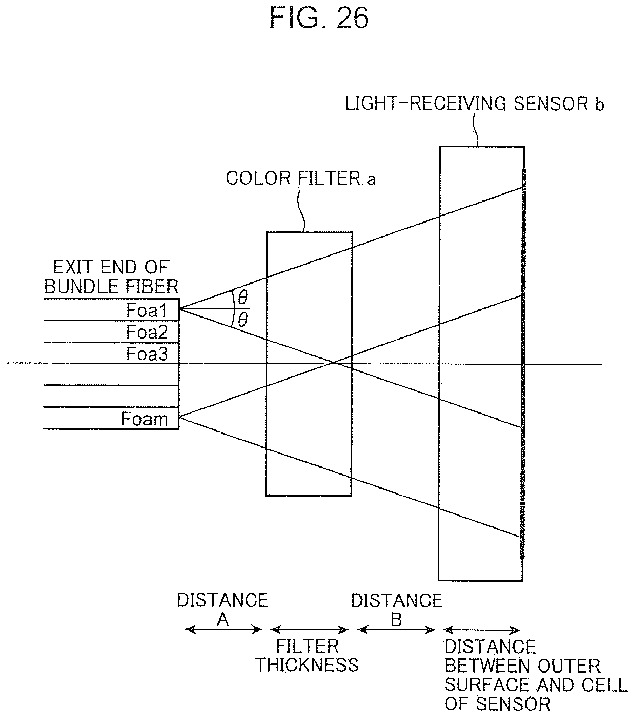

On this account, in the case of receiving all light beams (the above information), if it is attempted to perform it without any collecting lens, a color filter a and a light-receiving sensor b opposed to the fiber sub-bundle on the side of the outlet end (Foa1 to Foam) of the bundle fiber 12a are increased in size, and distances A, B therebetween are increased, as illustrated in FIG. 26, causing a huge problem with size (space) and cost. Cost of the color filter a and the light-receiving sensor b becomes higher along with an increase in size thereof. Thus, there is a need for forming them in a size reduced as much as possible.

For example, when a diameter $\phi$ of the fiber sub-bundle on the side of the exit end (Foal to Foam) is 2.3 mm and an output angle $\theta$ from the fiber is ± 40 degrees. The distance A between the exit end (Foal to Foam) and the color filter a is 1 mm ; a thickness of the color filter a is 1 mm ; the distance B between the color filter a and the light-receiving sensor b is 1 mm ; a distance from an outer surface to a light-receiving cell of the light-receiving sensor b is 1 mm. Thus, in the case where the total thickness is 4 mm, a cell size of the light-receiving sensor b (in a rectangular-shaped cell, a length of an end surface) becomes huge, specifically. (1.15 + tan 40 degrees × 4) × 2 = 9.0 mm.

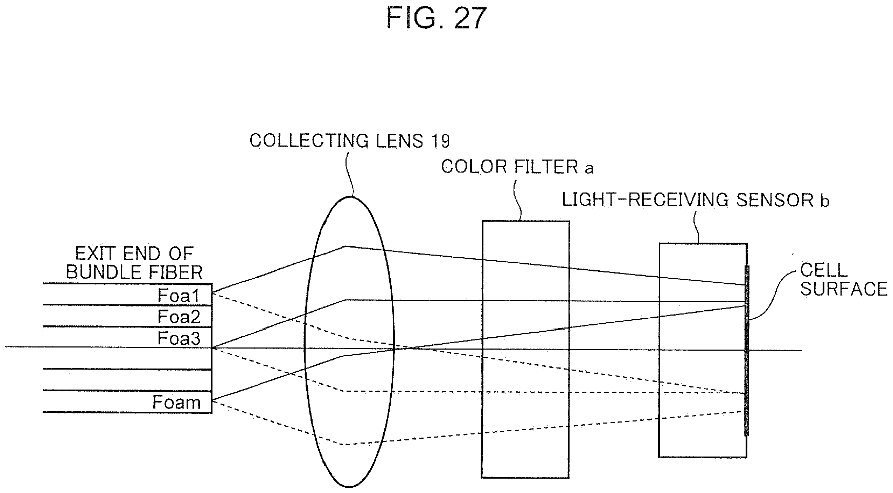

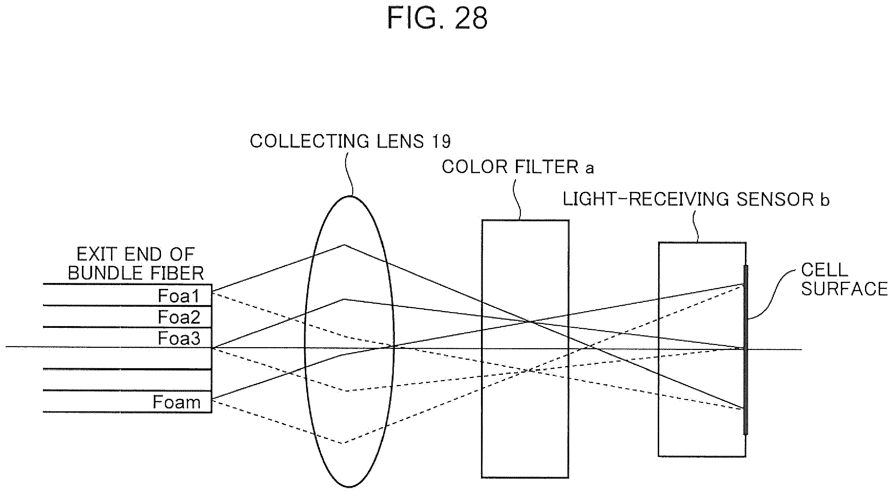

On the other hand, in the case of receiving all light beams (the above information) as mentioned above, in order to form the color filter a and the light-receiving sensor b in a size reduced as much as possible, it is conceivable to receive light after collecting it through a collecting lens. A configuration in this case is illustrated in FIGS. 27 and 28. FIG. 27 illustrates an example in which a collecting lens 19 is used to cause the light beam to become incident on the light-receiving sensor b in the form of parallel light, and FIG. 28 illustrates an example in which a collecting lens 19 is used to form an image on the light-receiving sensor b. However, the use of an interference filter as the color filter a in this configuration causes a problem that it is influenced by the information associated with each of the fiber strands and the information associated with incident angles onto the fiber strand as mentioned above.

More specifically, as for the information associated with each of the fiber strands, light beams output from the fiber strands become incident on the color filter a at different angles, respectively, so that light-receiving sensitivities to respective light beams output from the fiber strands having different information become different from each other. That is, as illustrated in FIGS. 27 and 28, an incident angle onto the color filter 12a varies between light output from the exit end Foal and light output from the exit end Foam.

As for the information associated with incident angles onto each of the fiber strands, when the fiber is short in length, light is output while maintaining the information associated with the incident angles, as mentioned above. Thus, as illustrated in FIGS. 27 and 28, output angles from each of the fiber strands reflect the incident angles and keep them as indicated by the solid and broken lines, which also leads to a variation in the incident angle onto the color filter a. However, when the fiber is sufficiently long in length, such a problem never occurs, because the incident angles are randomly mixed during passing through the fiber, so that output angles from each of the fiber strand are converted into uniformized (normalized) information. However, light is output under a fiber-specific NA, as mentioned above.

Similarly to the above, in the measuring probe 4" of the luminance meter illustrated in FIG. 18, an incident angle onto the color filter 13d is also correlated to an output position in a measurement plane. Specifically, light emitted from S1, S2, S3 varies from each other, and is continually incident onto the color filter 13d at a constant angle.

(Embodiment 1)

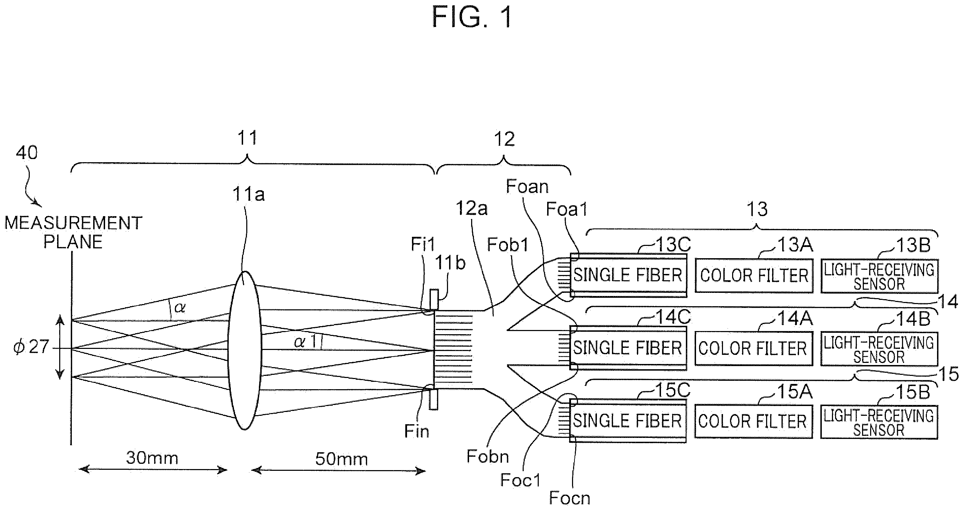

An embodiment will be described below. FIG. 1 is a diagram illustrating an internal configuration of a measuring probe 40 (illustrating a measuring optical system) according to the first embodiment of the invention. This measuring probe 40 is used as the measuring probe 4 of the color luminance meter illustrated in FIG. 19A or of the colorimeter illustrated in FIG. 19B. As one example of a measurement method, a color luminance meter is configured by equipping it with the measuring probe 40 disposed opposed to a display screen 3 of a liquid crystal monitor 2 for measuring light from the display screen 3, and a main meter unit 5 for obtaining a color and a luminance based on an output of the measuring probe 40, in the same manner as that mentioned above in connection with FIG. 17. As another example of the measurement method, a colorimeter is configured by equipping it with a measuring light illumination unit for emitting measuring light to a measuring object, a measuring probe 40 for measuring reflected light which is the measuring light reflected from the measuring object, and a main meter unit for obtaining a color based on an output of the measuring probe 40. In the schematic block configuration of the measuring probe 40, the measuring probe 40 is similar to the measuring probe 4' illustrated in FIG. 20, and therefore a corresponding element or component is denoted by assigning the same reference number or sign thereto.

More specifically, the measuring probe 40 comprises an objective optical system 11 for receiving light from a measuring object, a splitting optical system 12 for splitting light output from the objective optical system 11 into two or more, and two or more measuring optical systems 13, 14, 15 each provided in corresponding relation to a respective one of two or more exit ends of the splitting optical system 12 and adapted to detect light output from the exit end. The objective optical system 11 is configured using a biconvex lens 11a having a positive optical power (refractive power, a reciprocal of a focal length), and the splitting optical system 12 is configured using a bundle fiber 12a formed by bundling a plurality of fiber strands, wherein light output from the objective optical system 11 becomes incident on one end of the bundle fiber 12a, and the plurality of fiber strands are divided into two or more sub-bundles on the side of the other end. Further, an aperture stop 11b is disposed at a position of a back focal point of the convex lens 11a, and the objective optical system 11 is laid out in a front telecentric optical arrangement in order to capture a component within a half angle of $\alpha$, e.g. $\pm$ 2.5 degrees, with respect to a normal line of the display screen 3, as mentioned above. An inlet end (Fi1 to Fin) of the bundle fiber 12a faces to a plane of the aperture stop 11b.

In the measuring probe 40 of this embodiment, the colorimetric optical system 13 (14, 15) comprises: a single fiber 13C (14C, 15C) adapted to undergo incidence of light output from the other end of the bundle fiber 12a; an interference filter 13A (14A, 15A) adapted to undergo incidence of light output from the single fiber 13C (14C, 15C) and transmit the output light with a predetermined transmittance characteristic so as to serve as a color filter; and a light-receiving sensor 13B (14B, 15B) adapted to undergo incidence of light output from the interference filter 13A (14A, 15A) and detect intensity of the output light. The transmittance characteristic of the interference filter 13A (14A, 15A) is adjusted to a predetermined characteristic. Specifically, in order to employ an interference filter as the color filter 13A (14A, 15A), the single fiber 13C (14C, 15C) is interposed between the bundle fiber 12a and each of the interference filters, and the transmittance characteristic of the interference filter 13A (14A, 15A) is adjusted.

Further, as illustrated in FIG. 29, an optical fiber is ideally operable to cause incident light to undergo total reflection based on a difference in refraction index between a core and a clad. However, output positions and output angles practically become random due to a local difference in refraction index (stria), a local difference in fiber diameter (thick, thin), or a curve of a reflection interface caused by bending of the fiber, or distortion of a material (refractive index). As a result, incident light does not propagate as ideally described above, and output light is uniformized (output positions and output angles become random). Specifically, when the fiber has a certain long length or more, output light is normalized without depending on the characteristic of incident light onto the optical fiber, and is continually output in a stable condition depending on output angles (a diffusion effect similar to that of a diffusion plate is obtained, and a larger light intensity than that in the diffusion plate is obtained). The measuring probe 40 of this embodiment utilizes the aforementioned characteristic of the optical fiber.

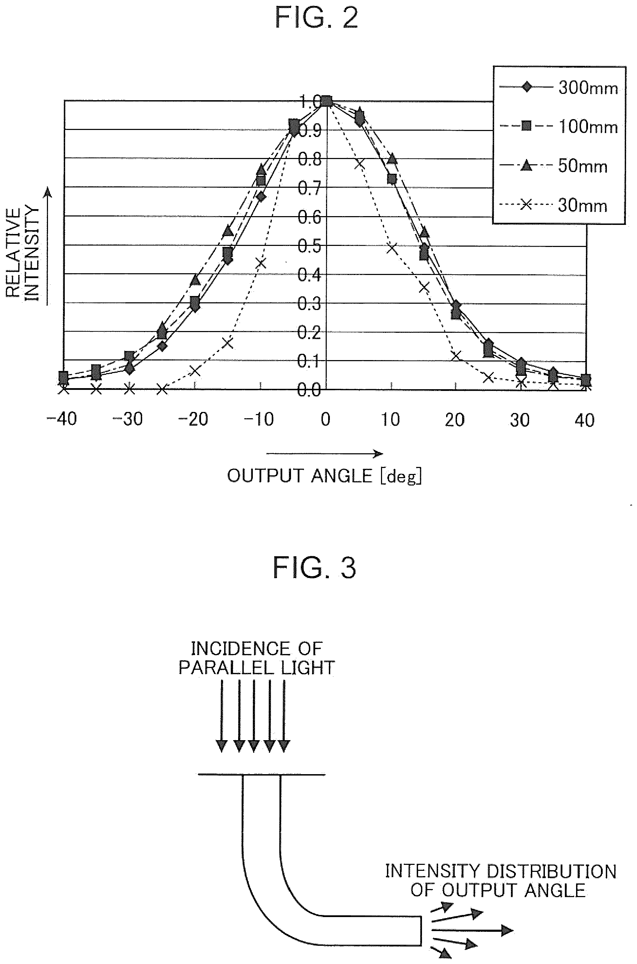

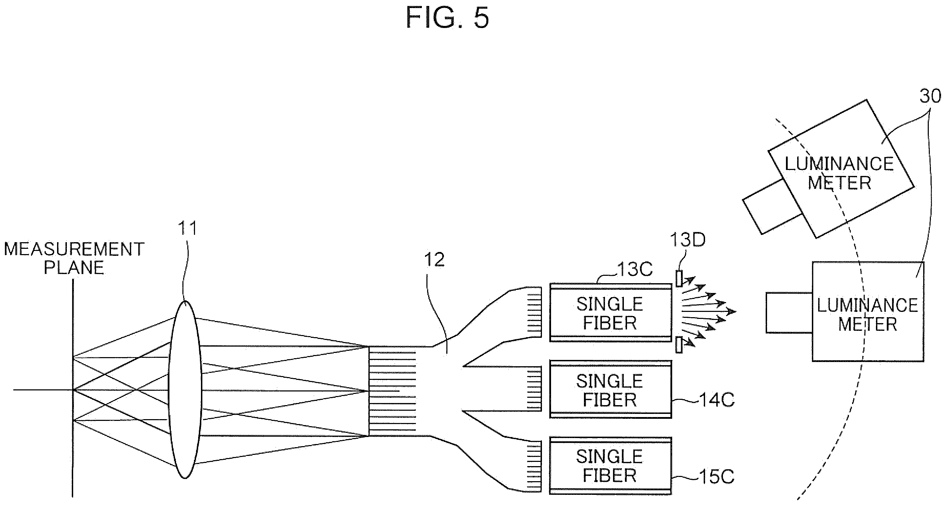

FIG. 2 illustrates an experiment result conducted by the inventor of the present application. FIG. 2 is a graph illustrating actual measurement data of output angles from an optical fiber. In the experiment, as illustrated in FIG. 3, substantially parallel light (a light beam with an angle of $\pm 2$ degree or less) was incident into the optical fiber, and a relative intensity at each of the angles was measured by an illustrated luminance meter facing an exit end by changing the angle (cone angle) with respect to a fiber axis while setting a peak intensity (substantially at 0° position) to 1, in the same manner as described referring to FIG. 5. The fiber was bent at one position with 90°. Further, the fiber was a plastic fiber (NA=0.5, $\phi$ = 1 mm). The length of the fiber was changed to 30 mm ($\times$), 50 mm (▲), 100 mm (■) and 300 mm (♦).

In the case where the parallel light is incident, as illustrated in FIG. 2, the effective aperture angle (width corresponding to 5% of a peak intensity) is about $\pm 35°$ when the fiber length is set to 50 mm. There is no significant change in the aperture angle by increasing the fiber length to 50 mm or longer. Thus, the aperture angle is stable. On the other hand, if the fiber length is set to 30 mm, the intensity distribution of output light becomes narrow, and the degree of mixing (uniformization) is low. However, these experiment data is a result obtained in the case where parallel light is incident. In a practical optical system, since incident light into a fiber has an angle characteristic, experiment data in the above experiment condition (parallel light incidence) is experiment data in a most severe condition.

In a practical optical system, not a parallel beam but a light beam having a certain angle characteristic is incident. Therefore, as far as the single fiber 13C (14C, 15C) has a length equal to or longer than 30 mm, mixing can be performed sufficiently uniformly. The relationship between incident light and output light, and the fiber length depends on the number of reflections between a core and a clad when light is guided through a fiber. In this experiment data, since the fiber length is 30 mm at $\phi$ = 1 mm, it is desirable to set the fiber length to a length equal to or greater than thirty times as large as the fiber diameter. Use of an optical fiber having such a length makes it possible to obtain a constantly stable condition depending on output angles, while normalizing (uniformizing) the output angle (the output angle does not have specific information).

Returning to FIG. 1, by combining the bundle fiber 12a with the single fibers 13C 14C, 15C each having a length equal to or greater than a predetermined value as described above, all the light beams output from the exit ends Foa1 to Foam; Fob1 to Fobm; Foc1 to Focm of the fiber strands of the bundle fiber 12a are respectively incident on the color filters 13A, 14A, 15A at identical divergent angles from the respective exit ends of the single fibers 13C, 14C, 15C, while uniformizing the luminous intensity distribution. Thus, even if output light from each of the fiber strands of the bundle fiber 12a has different information, respective transmittance characteristics in the interference filters 13A, 14A, 15A become identical, so that light data received by the light-receiving sensors 13B, 14B, 15B is not influenced by characteristics of the measuring object. In other words, an error induced by rotation of a measuring instrument never occurs. In this way, the measuring probe 40 in this embodiment is advantageous in uniformizing the information associated with each of the fiber strands of the bundle fiber 12a.

On the other hand, in the case where the single fiber 13C (14C, 15C) has a short length, the information associated with each of the fiber strands of the bundle fiber 12a is output while keeping it as it is. Thus, light beams output from the fiber strands of the bundle fiber 12a are incident to the color filters 13A, 14A, 15A while keeping the respective angles thereof, so that each of the incident light beams has different information, and thereby light-receiving sensitivities in the light-receiving sensors 13B, 14B, 15B become different from each other. That is, as mentioned above referring to FIG. 20, an incident angle onto the color filter 13A (14A, 15A) varies between a light ray indicated by the solid line and a light ray indicated by the broken line each output from the fiber strand. Therefore, it is necessary to cause light rays having different incident angles to be randomly mixed during passing through the fiber for converting the information associated with the light rays into uniformized information having a divergence defined by the aperture ratio (NA), by sufficiently increasing the fiber length of the single fiber 13C (14C, 15C). A length sufficiently enough to cancel out the information associated with incident angles onto each of the fiber strands is equal to or greater than thirty times as large as a core diameter, as described above.

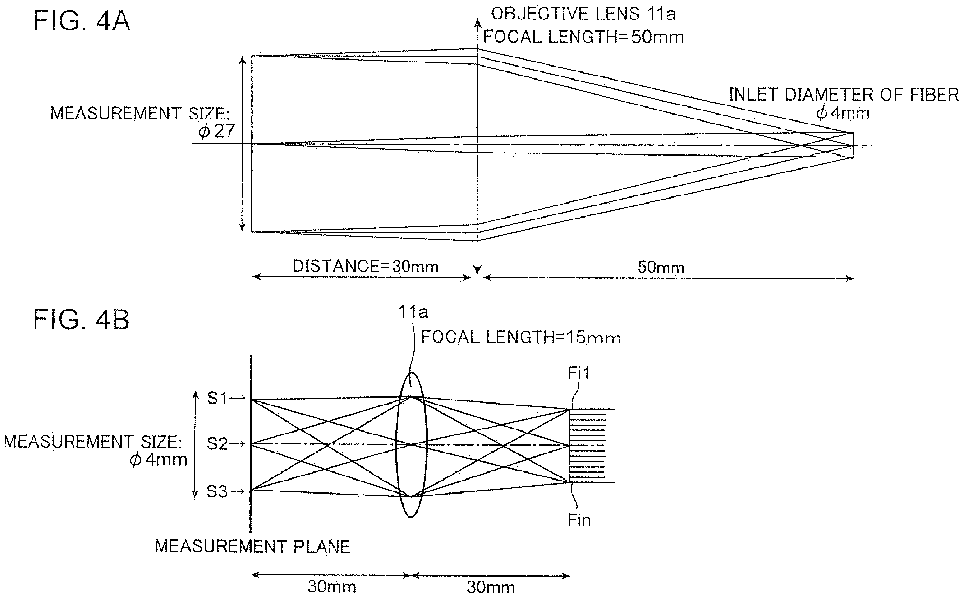

Further, in order to achieve a front telecentric optical arrangement, for example, as illustrated in FIG. 4A, assuming that a measurement range is set to a circle of $\phi$ = 27 mm, the objective lens 11a is configured such that a light-receiving aperture angle $\alpha$ is set to $\pm$ 2.3 degrees in design, considering that it is within $\pm$ 2.5 degrees in an industrial standard for measuring a liquid crystal monitor, while taking into account lens performance (aberration, etc.), and a distance from the display screen 3 to the objective lens 11a, an inlet diameter $\phi$ of the bundle fiber 12a and an image-side focal length f0 of the objective lens 11a are respectively set to 30 mm, 4.0 mm and 50 mm, an incident angle $\alpha 1$ (NA) of the bundle fiber 12a is about 15 degrees in a half-angle, as described later. In this case, an area of each exit end (three branched sub-bundles) of the bundle fiber 12a is $2.0^2 \times \pi / 3 = 4.18$ mm$^2$, and a diameter of the exit end is

$$2 \times \sqrt{(4.18 / \pi)} = 2.3 \ \mathrm{mm}.$$

As illustrated in FIG. 4B, the objective lens 11a may be in an optical arrangement in which the measurement plane and the inlet end (Fi1 to Fin) of the bundle fiber 12a are in image forming relation, in the case where there is no constraint that the light receiving aperture angle $\alpha$ should be within $\pm 2.5$ degrees, in other words, measurement is performed except for the liquid crystal monitor 2. In this case, positions on the measurement plane are correlated with respective ones of the fiber strands, for example, in such a manner that light emitted from one edge S1 of the measurement plane continually becomes incident on an inlet end Fin at one edge, and light emitted from the other edge S3 of the measurement plane continually becomes incident on an inlet end Fi1 at the other edge.

In the measuring optical system configured as above, a relationship between an incident angle and a transmittance of the interference filter is as mentioned above in connection with FIG. 25 (example of a Y filter). Correspondingly, in this embodiment, an actual intensity distribution of an incident light beam onto the interference filter, which varies based on characteristics of the bundle fiber 12a and the single fiber 13C (14C, 15C), is obtained, for example, by a measurement illustrated in FIG. 5, or a simulation. In FIG. 5, an intensity of a light beam emitted from the single fiber 13C is measured at all solid angles (cone angles) by moving a luminance meter 30 along the same radius from a center of the single fiber 13C. An aperture 13D is disposed at an incident position of the interference filter, on the exit end side of the single fiber 13C.

On the other hand, in a simulation, an incident angle onto the interference filter is determined by an exit area and an output angle of the single fiber 13C (14C, 15C). Then, an intensity distribution of a light beam incident on a filter face is calculated from respective conditions and characteristics of various optical components by using lens simulation software or the like. For example, a ray-tracing simulation may be performed based on the emission condition of the single fiber 13C (14C, 15C), provided that light is output from the fiber under a fiber-specific NA.

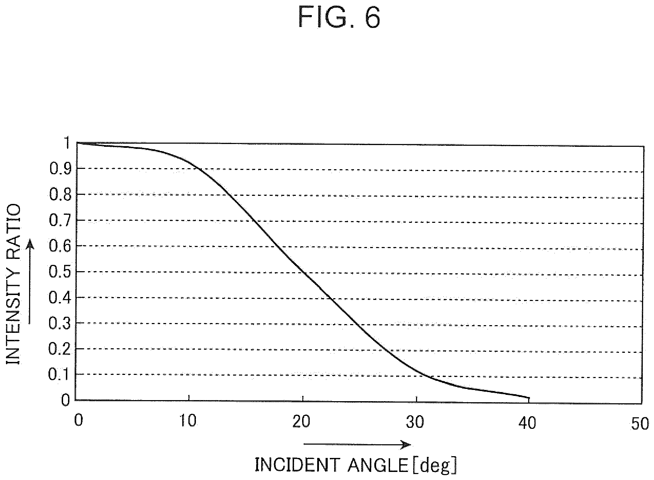

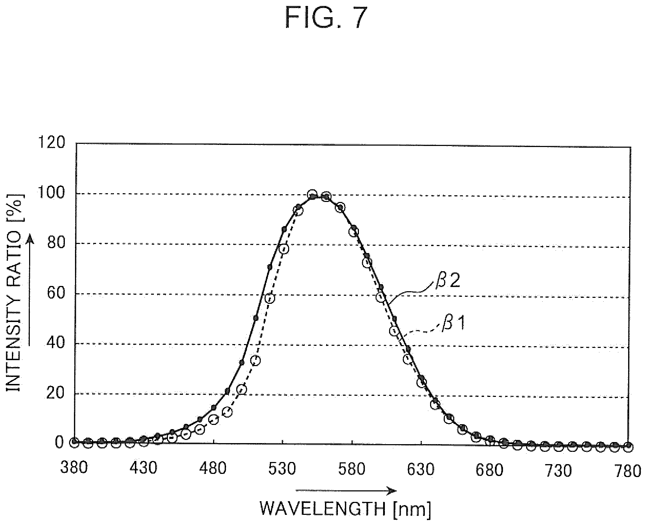

FIG. 6 illustrates an example of the intensity distribution of the light beam incident on the interference filter, obtained in the above manner. The example illustrated in FIG. 6 demonstrates a change in intensity occurring when the luminance meter 30 is moved along a predetermined range of a circular arc (one plane). A filter transmittance set while taking into account an intensity distribution with respect to incident angles can be calculated by multiplying a relative intensity (relative intensity derived based on solid angles: so-called "transmittance in cone angles"), as illustrated in FIG. 6, by a transmittance of the interference filter for each incident angle, as illustrated in FIG. 25. A result of the calculation is obtained as a curved line indicated, for example, by a reference sign $\beta 1$ (broken line) in FIG. 7.

A light-receiving sensitivity finally obtained by a measuring instrument is determined by considering characteristics such as a transmittance of the optical system (lenses, optical fibers, etc.), light-receiving sensitivity of the light-receiving sensor, a reflection characteristic of a surface of the light-receiving sensor or the like, as well as the above filter transmittance. In this embodiment, the interference filter is adjusted so that the finally obtained light-receiving sensitivity turns out to be approximated to a desired color-matching function (defined by CIE) such as indicated by a reference sign $\beta 2$ (solid line) in FIG. 7.

A condition for divergence of an incident angle onto the interference filter will be described below. If the interference filter is installed in an inclined posture due to component error, an intensity distribution with respect to incident angles onto the interference filter is deviated from a design value. Along with the deviation, obtained filter transmittance becomes different, and therefore a light-receiving sensitivity distribution of the sensor becomes different. The influence of change in transmittance occurring when the filter is installed in an inclined posture becomes more significant as the intensity distribution becomes narrower. Thus, it is desirable that the intensity distribution with respect to incident angles onto the filter has a certain level or more of range.

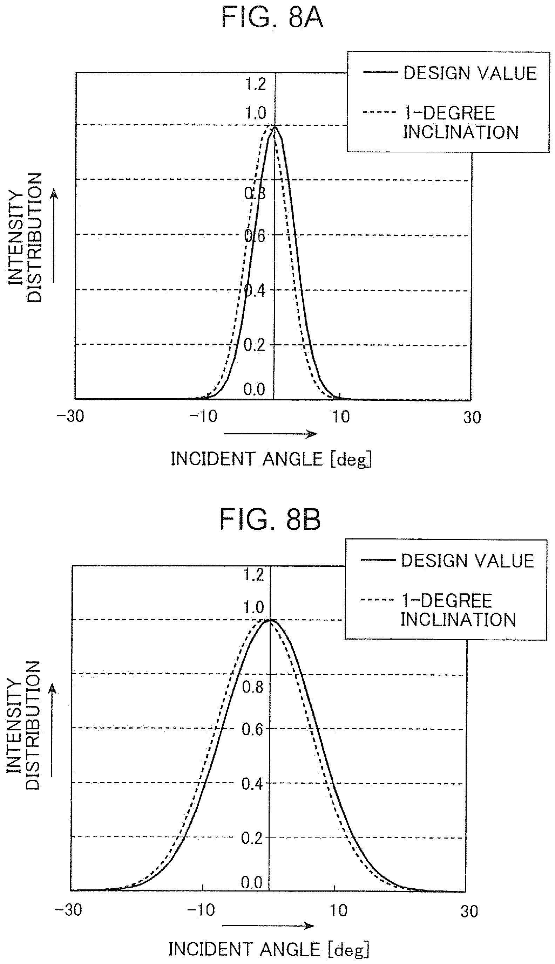

In this regard, FIG. 8 illustrates a distribution of incident angles and an influence of inclination of the filter. FIG. 8A is a graph illustrating an intensity distribution in design values, obtained when the incident angle is 7.5 degrees in a half angle (solid line), and an intensity distribution obtained when the filter is inclined by I degree (broken line). FIG. 8B is a graph illustrating an intensity distribution in design values, obtained when the incident angle is 17.5 degrees in a half angle (solid line), and an intensity distribution obtained when the filter is inclined by 1 degree (broken line). In this example, the incident angle of 7.5 degrees (half angle) is equivalent to an angle corresponding to about 5% of a peak value of the intensity distribution with respect to incident angles (in many cases, the peak value appears at 0 degree).

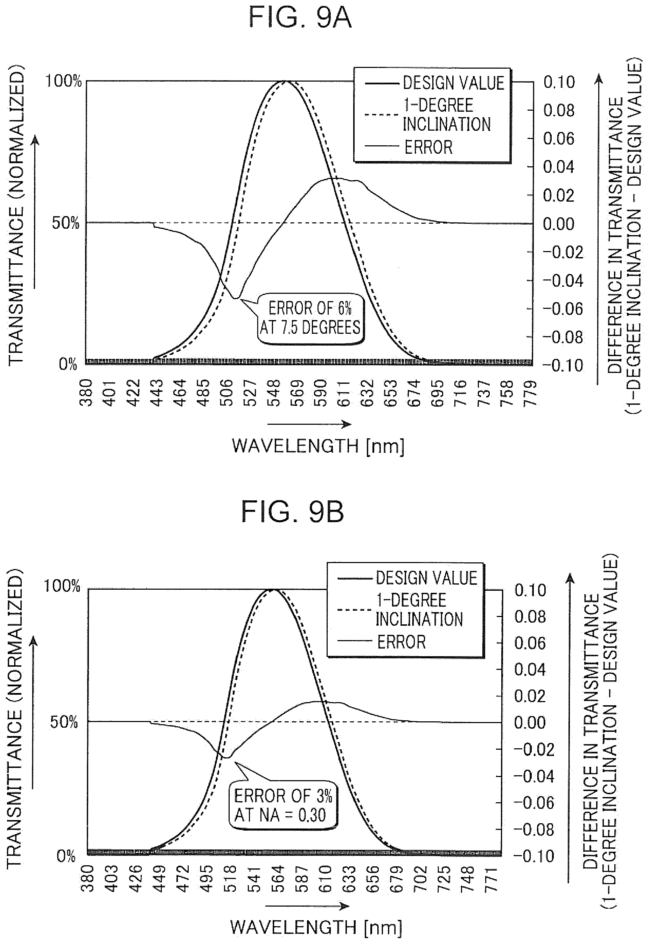

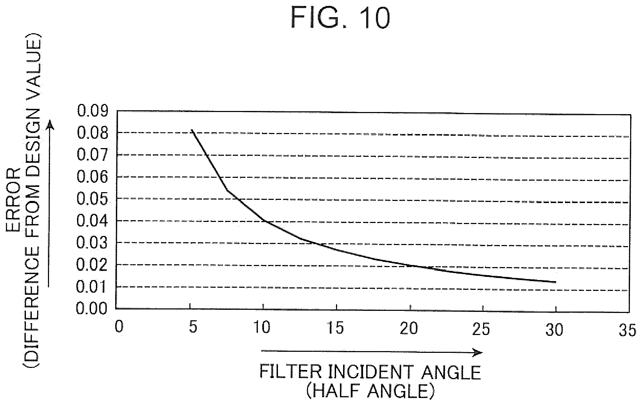

FIGS 9A and 9B illustrate transmittance distributions obtained when the interference filter illustrated in FIG. 25 is installed in the optical systems each having a respective one of the incident angle distributions illustrated in FIGS. 8A and 8B. In FIGS. 9A and 9B, a deviation in an inclination value with respect to the design value is indicated with emphasis. As is clear from comparison between FIGS. 9A and 9B, an error due to inclination of the filter becomes smaller as the intensity distribution with respect to incident angles becomes wider. The relationship between a filter incident angle and an error (a difference from the design value) is graphically represented as a curve illustrated in FIG. 10. FIG. 10 shows that, in a situation where the filter is inclined by 1 degree, the error can be suppressed to 2.5% or less by setting the divergence of the incident angle to above 15 degrees (half angle). Thus, in view of error sensitivity with respect to inclination of the fiber during actual use, the divergence of the incident angle onto the interference filter is set to 15 degrees or more (half angle).

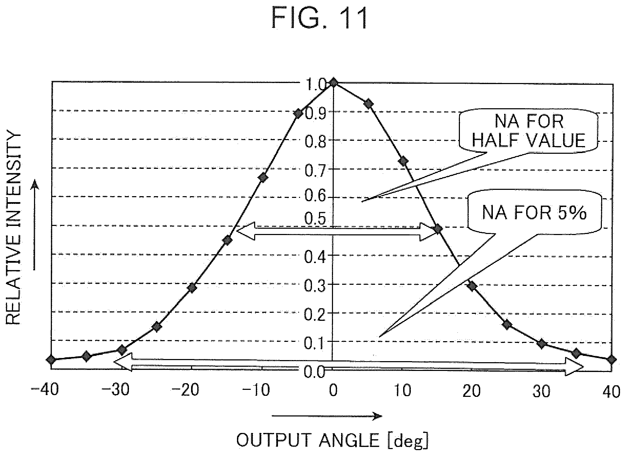

Therefore, in order to allow the output angle of the single fiber 13C (14C, 15C) to become 15 degrees or more in a half angle, the aperture ratio NA of the single fiber 13C (14C, 15C) is set to 0.26 (15 degrees) or more. The term "NA of the fiber" here means both an NA in design and an actual (effective) NA. The NA in design is a value generally calculated from a refractive index of a core of the fiber and a refractive index of a clad of the fiber, and the actual (effective) NA is an actually measured value of output angle from the fiber. As illustrated in FIG. 11, the actual fiber output angle is similar to a Gaussian shape, and includes an NA (50%) for use in indicating a width corresponding to a half of a peak value, and an NA (5%) for use in indicating a width corresponding to 5% of the peak value. In the case where the incident angle $\alpha1$ on the fiber is set to 15 degrees as mentioned above, light can be guided only if the effective NA (5%) is 15 degrees or more. Thus, the NA is set to satisfy the following relation: NA (5%) > NA 0.26 (15 degrees).

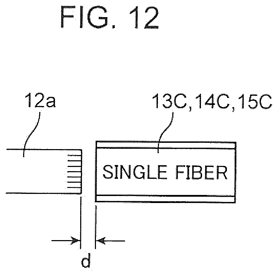

On the other hand, in the case where the bundle fiber 12a and the single fiber 13C (14C, 15C) are connected to each other simply by e.g. firm contact (jointing), interference due to in-plane reflection occurs, resulting from a difference in plane precision of both of the members, and light intensity loss may occur. Such a connection method is not preferred. In view of the above, it is preferred to fill e.g. an optical adhesive or resin (because in-plane reflection does not occur), or it is preferred to form a gap (air space) d of such a size that does not cause interference (exceeding a gap that causes interference) (ten times as large as the wavelength order = 5 $\mu$m or more), in a joint portion between the bundle fiber 12a and the single fiber 13C (14C, 15C) illustrated in FIG. 12. In the case where there is used a single fiber of a diameter equal to or smaller than the diameter of the bundle fiber, it is not preferable to exceedingly increase the size of the gap, because light intensity loss at a joint portion increases, as the size of the gap increases.

As described above, the measuring probe 40 in this embodiment is employed in a luminance meter, a color luminance meter, a colorimeter and others, and configured such that the objective optical system 11 receives light beams emitted from a light source or light beams reflected by a measuring object, and allows the light beams to be incident onto the bundle fiber 12a comprised of a large number of fiber strands bundled together, wherein the light beams are split and output from two or more exit faces of the bundle fiber 12a, whereafter the light beams are transmitted through the color filters 13A, 14A, 15A each comprised of an interference filter, and introduced into the light-receiving sensors 13B, 14B, 15B for obtaining intensity of the light beams (luminance or illuminance value). In order to solve the aforementioned problem with absorption color filters, the single fiber 13C (14C, 15C) is interposed between the bundle fiber 12a and the color filter 13A (14A and 15A), and a transmittance characteristic of each of the interference filters is adjusted.

Thus, the measuring probe 40 in this embodiment is configured in such a manner that, irrespective of an incident position of a light beam onto the bundle fiber 12a, in other words, regardless of position information or angle information about a measuring object, a light beam is output from an exit face of the single fiber 13C (14C, 15C) with a predetermined luminous intensity distribution (the output angle is stable corresponding to a fiber-specific NA) and in a uniformized state, whereby stable data on received light sensitivity is obtained. Therefore, by setting the transmittance characteristic of each of the interference filters such that, when a light beam with the predetermined luminous intensity distribution is incident onto the interference filter, a resulting transmitted light beam has a transmittance characteristic corresponding to a measurement parameter of the light-receiving sensor 13B (14B, 15B). As a result, the luminous intensity distribution is widened but uniformized, and the transmittance characteristic of the interference filter is coordinated with the luminous intensity distribution, instead.

Therefore, the measuring probe 40 in this embodiment can utilize advantages of an interference filter, such as a capability to set any transmittance characteristic, low light intensity loss and high stability, while making up for a disadvantage of the interference filter, i.e., a large deviation in the transmittance characteristic due to incident angles. Further, in the case where uniformization and stabilization are achieved by using a diffusion plate, a diffusion plate having high diffusion performance is required to perform sufficient uniformization. Such a diffusion plate has a low transmittance, and it is difficult to obtain a sufficient light intensity as a measuring instrument. Contrary to these disadvantages, the measuring probe 40 in this embodiment is advantageous in suppressing light intensity loss as much as possible by using the single fibers 13C, 14C, 15C.

(Embodiment 2)

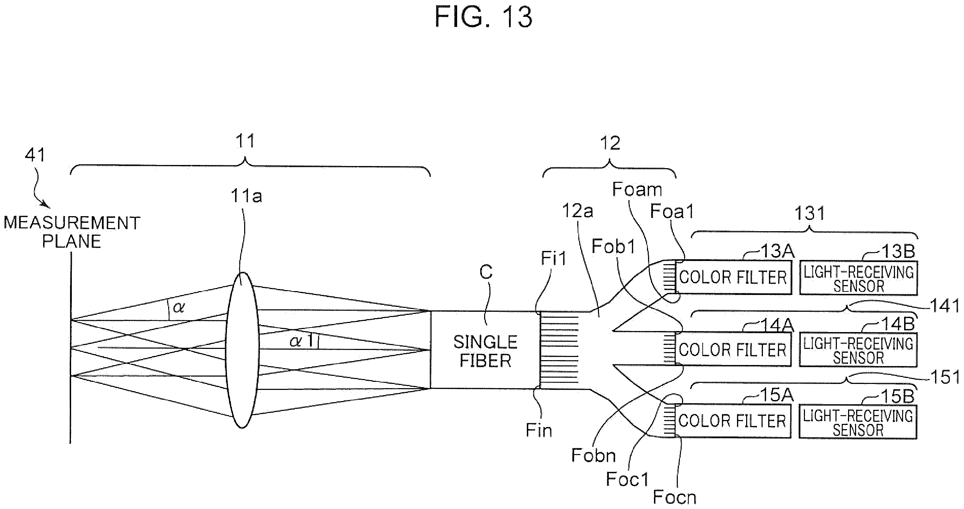

FIG. 13 is a diagram illustrating an internal configuration of a measuring probe 41 (illustrating a measuring optical system) according to the second embodiment of the invention. The measuring probe 41 is similar to the measuring probe 40 illustrated in FIG. 1, and elements or components corresponding to those illustrated in FIG. 1 are assigned with the same reference numerals or signs, and duplicated description thereof will be appropriately omitted. Specifically, the measuring probe 41 comprises an objective optical system 11 for receiving light from a measuring object, a single fiber C adapted to undergo incidence of light output from the objective optical system 11, a splitting optical system 12 for splitting light output from the single fiber C into two or more, and two or more colorimetric optical systems 131, 141, 151 each provided in corresponding relation to a respective one of two or more exit ends of the splitting optical system 12 and adapted to detect light output from the exit end. The objective optical system 11 is configured using a biconvex lens 11a having a positive optical power, and the splitting optical system 12 is configured using a bundle fiber 12a formed by bundling a plurality of fiber strands, wherein light output from the single fiber C is incident on one end, and the plurality of fiber strands are divided into two or more sub-bundles on the side of the other end. Further, the colorimetric optical system 131, 141, 151 respectively include interference filters 13A, 14A, 15A adapted to undergo incidence of light output from the other end of the splitting optical system 12, in this embodiment, from the other end of the bundle fiber 12a. and transmit the output light with a predetermined transmittance characteristic so as to serve as a color filter; and light-receiving sensors 13B, 14B, 15B adapted to undergo incidence of light output from the interference filters 13A, 14A, 15A and detect intensity of the output light. The transmittance characteristic of the interference filter 13A (14A, 15A) is adjusted to a predetermined characteristic.

Unlike the measuring probe 40 of the first embodiment, in the measuring probe 41 of this embodiment, the colorimetric optical system 131 (141, 151) is not provided with a single fiber 13C (14C, 15C), but the single fiber C is disposed between the objective optical system 11 and the splitting optical system 12. Specifically, in the case of the measuring probe 41 illustrated in FIG. 13, specific information on a measuring object with respect to an incident light beam from the objective optical system 11 is uniformized by the single fiber C before incidence into the splitting optical system 12. The output angle and the intensity of an output light beam from the splitting optical system 12 are also uniformized. Therefore, even if an interference filter is disposed immediately posterior to the splitting optical system, the intensity distribution depending on the incident angle is determined by NA of the bundle fiber 12a (splitting optical system 12).

The measuring probe 41 having the above configuration is also advantageous in making up for a disadvantage of the interference filter, while utilizing advantages of the interference filter. As described in the first and second embodiments, the single fiber C (single fibers 13C, 14C, 15C) may be disposed at either one of the exit end or the inlet end of the bundle fiber 12a. The length of the single fiber C (single fibers 13C, 14C, 15C) is preferably set to about thirty times as large as the diameter, as described above. Therefore, it is necessary to set the length of the single fiber C which is installed at the inlet end (Fil to Fin) of the bundle fiber 12a having a large diameter to a long length, as compared to the single fibers 13C, 14C, 15C which are installed at the exit end Foa1 to Foam; Fob1 to Fobm; Foc1 to Focm. Thus, it is preferred to install the single fiber at the exit end Foa1 to Foam; Fob1 to Fobm; Foc1 to Focm.

(Embodiment 3)

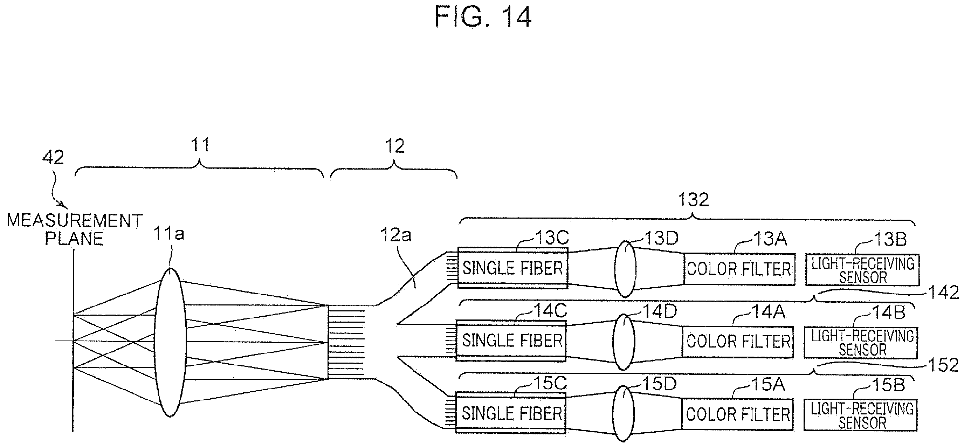

FIG. 14 is a diagram illustrating an internal configuration of a measuring probe 42 (illustrating a measuring optical system) according to the third embodiment of the invention. The measuring probe 42 is similar to the measuring probe 40 illustrated in FIG. 1, and elements or components corresponding to those illustrated in FIG. 1 are assigned with the same reference numerals or signs, and duplicated description thereof will be appropriately omitted. Specifically, in place of the colorimetric optical systems 13, 14, 15 in the measuring probe 40 of the first embodiment illustrated in FIG. 1, the measuring probe 42 of this embodiment is provided with colorimetric optical systems 132, 142, 152. The colorimetric optical systems 132, 142, 152 respectively include single fibers 13C, 14C, 15C adapted to undergo incidence of light output from the other end of a splitting optical system 12, in this embodiment from the other end of a bundle fiber 12a; interference filters 13A, 14A, 15A adapted to undergo incidence of light output from the single fibers 13C, 14C, 15C, and transmit the output light with a predetermined transmittance characteristic so as to serve as a color filter; and light-receiving sensors 13B, 14B, 15B adapted to undergo incidence of light output from the interference filters 13A, 14A, 15A and detect intensity of the output light. The transmittance characteristic of the interference filter 13A (14A, 15A) is adjusted to a predetermined characteristic. In the measuring probe 42 of this embodiment, the colorimetric optical system 132 (142, 152) is configured in such a manner that a collecting lens 13D (14D, 15D) is disposed between the single fiber 13C (14C, 15C) and the color filter 13A (14A, 15A).

This is because there is no need of considering behaviors of light rays at the collecting lenses 13D, 14D, 15D, since specific information on a measuring object with respect to an incident light beam from the objective optical system 11 is sufficiently uniformized by the single fibers 13C, 14C, 15C. The measuring probe 42 having the above configuration is advantageous in miniaturizing the color filters 13A, 14A, 15A and the light-receiving sensors 13B, 14B, 15B by collecting divergent light to be outputted from the single fibers 13C, 14C, 15C and allowing incidence onto the color filters 13A, 14A, 15A.

(Embodiment 4)

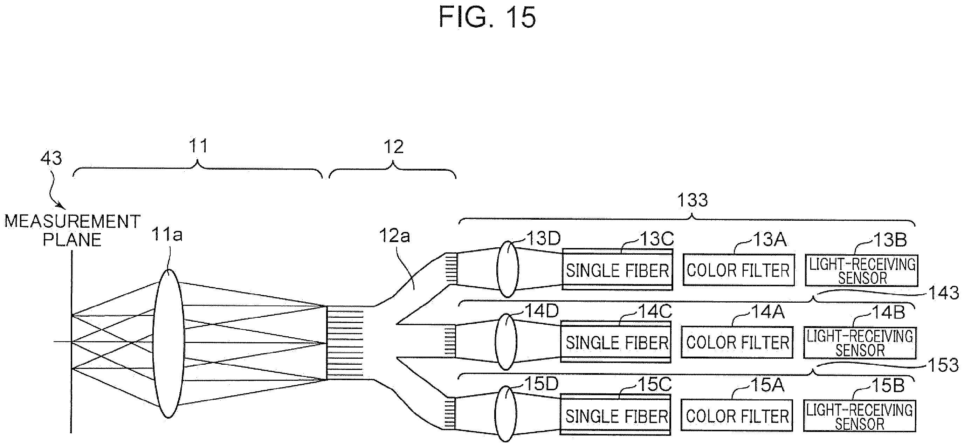

FIG. 15 is a diagram illustrating an internal configuration of a measuring probe 43 (illustrating a measuring optical system) according to the fourth embodiment of the invention. The measuring probe 43 is similar to the measuring probe 42 illustrated in FIG. 14, and elements or components corresponding to those illustrated in FIG.

14 are assigned with the same reference numerals or signs, and duplicated description thereof will be appropriately omitted. Specifically, in place of the colorimetric optical systems 13, 14, 15 in the measuring probe 40 of the first embodiment illustrated in FIG. 1, the measuring probe 43 of this embodiment is provided with colorimetric optical systems 133, 143, 153. The colorimetric optical systems 133, 143, 153 respectively include single fibers 13C, 14C, 15C adapted to undergo incidence of light output from the other end of a splitting optical system 12, in this embodiment from the other end of a bundle fiber 12a through collecting lenses 13D, 14D, 15D; interference filters 13A, 14A, 15A adapted to undergo incidence of light output from the single fibers 13C, 14C, 15C, and transmit the output light with a predetermined transmittance characteristic so as to serve as a color filter; and light-receiving sensors 13B, 14B, 15B adapted to undergo incidence of light output from the interference filters 13A, 14A, 15A and detect intensity of the output light. The transmittance characteristic of the interference filter 13A (14A, 15A) is adjusted to a predetermined characteristic. In the measuring probe 43 of this embodiment, the colorimetric optical system 133 (143, 153) is configured in such a manner that the collecting lens 13D (14D, 15D) is disposed between the bundle fiber 12a and the single fiber 13C (14C, 15C).

Therefore, in the example illustrated in FIG. 25, divergent light from the bundle fiber 12a is collected on the collecting lenses 13D, 14D, 15D. The collected light is incident into the single fibers 13C, 14C, 15C for further divergence, and then incident onto the color filters 13A, 14A, 15A. The measuring probe 43 having the above configuration is also advantageous in miniaturizing the color filters 13A, 14A, 15A and the light-receiving sensors 13B, 14B, 15B. Further, in the case where the collecting lens 13D (14D, 15D) is disposed between the bundle fiber 12a and the single fiber 13C (14C, 15C), the diameter of the single fiber 13C (14C, 15C) can be decreased, which is advantageous in shortening the single fiber 13C (14C, 15C).

(Embodiment 5)

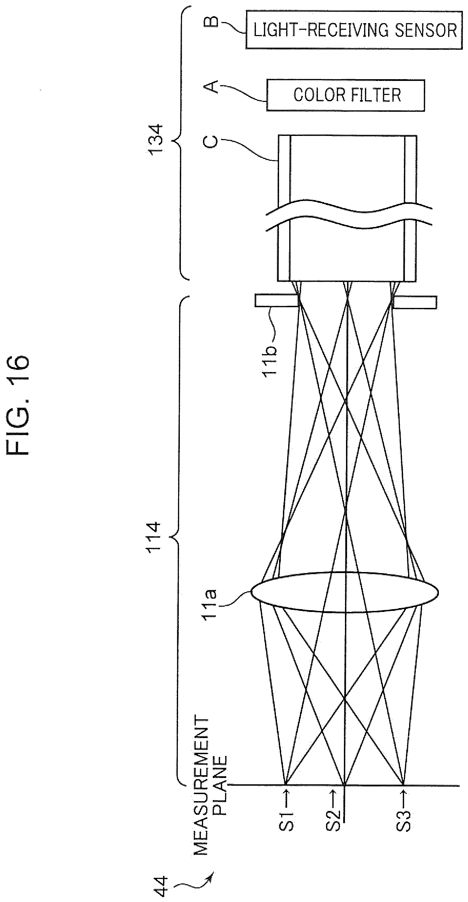

FIG. 16 is a diagram illustrating an internal configuration of a measuring probe 44 (illustrating a measuring optical system) according to the fifth embodiment of the invention. The measuring probe 44 is similar to the measuring probe 40 illustrated in FIG. 1, and elements or components corresponding to those illustrated in FIG. 1 are assigned with the same reference numerals or signs, and duplicated description thereof will be appropriately omitted. Specifically, in place of the objective optical system 11 and the colorimetric optical systems 13, 14, 15 in the measuring probe 40 of the first embodiment illustrated in FIG. 1, the measuring probe 44 of this embodiment is provided with an objective optical system 114 and a colorimetric optical system 134. The colorimetric optical system 134 includes a single fiber C for receiving light output from the objective optical system 114; an interference filter A adapted to undergo incidence of light output from the single fiber C, and transmit the output light with a predetermined transmittance characteristic so as to serve as a color filter; and a light-receiving sensor B adapted to undergo incidence of light output from the interference filter A and detect intensity of the output light. The transmittance characteristic of the interference filter A is adjusted to a predetermined characteristic.

The measuring probe 44 of this embodiment is used for the luminance meter as illustrated in FIG. 18, and the colorimetric optical system 134 is constituted of the single color filter A, the single light-receiving sensor B and the single fiber C. In the case where the number of the light-receiving sensors B is one as described above, the splitting optical system 12 may be omitted in the measuring probe 44. Specifically, the objective optical system 114 is configured in such a manner that the single fiber C is disposed at a rear position of an aperture stop 11b (at a front position of the color filter A), so that a light beam to be outputted from the single fiber C is received by the light-receiving sensor B through the interference filter A.

In the case where the measuring probe 44 is configured as above, characteristic information such as position information about a measuring object as indicated by the reference signs S1 through S3 gives characteristics to incident angles or incident positions with respect to the single fiber C. However, during a time when the light beam passes through the single fiber C, the characteristics are mixed, and these characteristics are uniformized at the time when the light beam is output from the single fiber C. Further, the output angle from the single fiber C is specific to the fiber's NA, and accordingly is stable. Therefore, light is incident onto an interference filter with a constant angle (corresponding to the fiber's NA). Thus, it is possible to obtain stable data on received light sensitivity, regardless of the characteristics (position or angle characteristics) of a measuring object.

The specification discloses the aforementioned arrangements. The following is a summary of the primary arrangements of the embodiments.

A measuring optical system according to one aspect is a measuring optical system which is configured in such a manner that a light beam from a measuring object is received by an objective optical system, is allowed to be transmitted through an interference filter with a predetermined transmittance characteristic, and then is allowed to be incident onto a sensor for obtaining an intensity of the light beam. The measuring optical system includes a single fiber which is interposed between the objective optical system and the interference filter, wherein the interference filter is formed to obtain a transmittance characteristic corresponding to a measurement parameter, according to a condition of an intensity distribution with respect to incident angles of light incident onto the interference filter.

The measuring optical system having the above configuration is employed, for example, in a luminance meter, a color luminance meter and a colorimeter. The objective optical system is operable, when the measuring optical system is employed in the luminance meter or the color luminance meter, to receive light beams emitted from a light source such as a liquid crystal monitor or a lamp, or, when the measuring optical system is employed in the colorimeter, to receive light beams of illumination light emitted from a predetermined illumination light source and then reflected by a measuring object, and allow the light beams to be incident onto the sensor for obtaining an intensity of the light beam (luminance or illuminance value) through the interference filter. In this manner, the measuring optical system intends to solve the problem with absorption color filters. Further, in the measuring optical system, the single fiber is interposed between the objective optical system and the interference filter, and a transmittance characteristic of the interference filter is adjusted.

More specifically, firstly, the single fiber is configured to be disposed between the objective optical system and the interference filter, so that the light beam is output from an exit face of the single fiber with a predetermined luminous intensity distribution and in a uniformed state, irrespective of an output position of the light beam on the measuring object. Specifically, a light beam is incident onto the interference filter in a state that position information or angle information about a measuring object is uniformized. Secondly, a transmittance characteristic of the interference filter is set such that, when a light beam output from the exit face of the single fiber with a predetermined luminous intensity distribution is incident onto the interference filter, a resulting transmitted light beam has a transmittance characteristic corresponding to a measurement parameter of the sensor. Specifically, conventionally, in order to suppress a deviation in the transmittance characteristic due to incident angles onto an interference filter, it has been tried to allow a light beam incident onto the interference filter to become close to parallel rays (allow the luminous intensity distribution to become narrow). Differently, in this aspect, although the luminous intensity distribution of a light beam incident onto the interference filter is widened, uniformity is given to the luminous intensity distribution, and the transmittance characteristic of the interference filter is coordinated with the luminous intensity distribution, instead.

Therefore, the measuring optical system having the above configuration can utilize advantages of an interference filter, such as a capability to set any transmittance characteristic, low light intensity loss and high stability, while making up for a disadvantage of the interference filter, i.e., a large deviation in the transmittance characteristic due to incident angles.

Preferably, the measuring optical system may further include a bundle fiber which is composed of a plurality of fiber strands bundled together, and formed such that light emitted from the objective optical system is incident on one end thereof, and the fiber strands are divided into two or more sub-bundles on the other end thereof for incidence onto respective single fibers. Further, a measuring optical system according to another aspect includes an objective optical system for receiving light from a measuring object; a bundle fiber which is composed of a plurality of fiber strands bundled together, and formed such that light emitted from the objective optical system is incident on one end thereof, and the fiber strands are divided into two or more sub-bundles on the other end thereof; and two or more colorimetric optical systems each provided in corresponding relation to a respective one of the divided other ends of the bundle fiber and adapted to detect light output from the divided other end of the bundle fiber. In the above arrangement, each of the colorimetric optical systems includes a single fiber adapted to undergo incidence of light output from the divided other end of the bundle fiber; an interference filter adapted to undergo incidence of light output from the single fiber and transmit the output light with a predetermined transmittance characteristic; and a light-receiving sensor adapted to undergo incidence of light output from the interference filter and detect intensity of the output light. The interference filter is formed to obtain a transmittance characteristic corresponding to a measurement parameter, according to a condition of an intensity distribution with respect to incident angles of light incident onto the interference filter.

Preferably, the measuring optical system may further include a bundle fiber which is composed of a plurality of fiber strands bundled together, and formed such that light emitted from the single fiber is incident on one end thereof, and the fiber strands are divided into two or more sub-bundles on the other end thereof for incidence onto respective interference filters. Further, a measuring optical system according to another aspect includes an objective optical system for receiving light from a measuring object; one single fiber adapted to undergo incidence of light output from the objective optical system; a bundle fiber which is composed of a plurality of fiber strands bundled together, and formed such that light emitted from the single fiber is incident on one end thereof, and the fiber strands are divided into two or more sub-bundles on the other end thereof; and two or more colorimetric optical systems each provided in corresponding relation to a respective one of the divided other ends of the bundle fiber and adapted to detect light output from the divided other end of the bundle fiber. In the above arrangement, each of the colorimetric optical systems includes an interference filter adapted to undergo incidence of light output from the other end of the bundle fiber and transmit the output light with a predetermined transmittance characteristic; and a light-receiving sensor adapted to undergo incidence of light output from the interference filter and detect intensity of the output light. The interference filter is formed to obtain a transmittance characteristic corresponding to a measurement parameter, according to a condition of an intensity distribution with respect to incident angles of light incident onto the interference filter.

In each of the measuring optical systems having the above configurations, by further interposing a bundle fiber, it is possible to split the received light beam and uniformize position information, while obtaining a plurality of different data on received light sensitivity.

Preferably, in each of the aforementioned measuring optical systems, the single fiber may have a length equal to or greater than thirty times as large as a diameter of a core thereof.

In the measuring optical system having the above configuration, as the length of the single fiber increases, an influence of luminosity light distribution of the light beam is reduced. In other words, the output positions and the output angles become random, and a diffusion effect similar to that of a diffusion plate can be obtained (a decrease in light intensity is less than that in the diffusion plate).

Accordingly, by setting the length of the single fiber to a length equal to or greater than thirty times of the core diameter, the measuring optical system is advantageous in uniformly outputting incident light, and in outputting the light with an intensity distribution depending on an output angle under the fiber-specific NA.

In each of the aforementioned measuring optical systems, a divergence of the incident angle onto the interference filter is set to 15 degrees or more with respect to a normal line to the interference filter.

In the measuring optical system having the above configuration, the predetermined luminous intensity distribution, i.e., the solid angle (cone angle), is widened to 15 degrees or more, as mentioned above. This reduces an error due to inclination of the interference filter.

Preferably, in each of the aforementioned measuring optical systems, an optical adhesive or a resin may be filled between the bundle fiber and the single fiber.

The measuring optical system having the above configuration is advantageous in reducing or eliminating in-plane reflection on a joint portion between the bundle fiber and the single fiber. Thus, it is possible to decrease light intensity loss between the bundle fiber and the single fiber.

Preferably, in each of the aforementioned measuring optical systems, the bundle fiber and the single fiber may be disposed with a gap of a such a size that does not cause optical interference.

In the measuring optical system having the above configuration, it is possible to decrease light intensity loss on a joint portion between the bundle fiber and the single fiber by setting the gap between the bundle fiber and the single fiber to such a size that does not cause optical interference, in other words, by defining the gap (air space) to a size of about ten times (5 μm) as large as the wavelength order.

Preferably, each of the aforementioned measuring optical systems may further include a collecting lens which is provided on an inlet end side or on an exit end side of the single fiber.

The measuring optical system having the above configuration is advantageous in miniaturizing the interference filter and the light-receiving sensor. In particular, in the case where the collecting lens is disposed between the bundle fiber and the single fiber, the measuring optical system is advantageous in reducing the diameter of the single fiber, which makes it possible to shorten the single fiber.

A luminance meter, a color luminance meter and a colorimeter according to another aspect each is incorporated with one of the aforementioned measuring optical systems.

Thus, it is possible to attain a high-accuracy luminance meter, a high-accuracy color luminance meter and a high-accuracy colorimeter using an interference filter.

This application is based on Japanese Patent Application No. 2010-112186 filed in Japan Patent Office on May 14, 2010.

Although the present invention has been adequately and fully described by way of example with reference to the accompanying drawings, it is to be understood that various changes and/or modifications will be apparent to those skilled in the art. The scope of the invention is defined by the appended claims.

INDUSTRIAL APPLICABILITY

The present invention can provide a measuring optical system, and a luminance meter, a color luminance meter and a colorimeter each using the measuring optical system.

**Claims**

1. A measuring probe (40, 41, 42, 43, 44) comprising:

    an objective optical system (11, 114) for receiving a light beam from a measuring object (3),
    an interference filter (13A, 14A, 15A; 134A) having a predetermined transmittance characteristic,
    a light receiving sensor (13B, 14B, 15B; 134B), and
    a single fiber (13C, 14C, 15C; 134C) which is interposed between the objective optical system and the interference filter, the single fiber being constituted by a single fiber strand, wherein
    the measuring probe is configured in such a manner that the light beam is allowed to be transmitted through the interference filter (13A, 14A, 15A; 134A), and then is allowed to be incident onto the light receiving sensor (13B, 14B, 15B;

134B) for obtaining an intensity of the light beam, wherein

the light beam is output from an exit face of the single fiber (13C, 14C, 15C; 134C) with a predetermined luminous intensity distribution and in a uniformized state regardless of position information or angle information about the measuring object (3),

the light beam is incident on the interference filter (13A, 14A, 15A; 134A) with a predetermined luminous intensity distribution as a function of incident angle in a range of incident angles,

the divergence of the light beam incident onto the interference filter is set to 15 degrees or more with respect to a normal line to the interference filter, and

the predetermined transmittance characteristic of the interference filter (13A, 14A, 15A; 134A) is set by taking into account the predetermined luminous intensity distribution as a function of incident angle of the light beam incident on the interference filter, such that the light-receiving sensitivity of the measuring probe at the light receiving sensor approximates a desired color matching function (13B, 14B, 15B; 134B).

2. The measuring probe (40, 42, 43) according to claim 1, wherein the measuring probe is provided with a plurality of the single fibers (13C, 14C, 15C), a plurality of the interference filters (13A, 14A, 15A) and a plurality of the light-receiving sensors (13B, 14B, 15B), and

the measuring probe further includes a bundle fiber (12a) which is composed of a plurality of fiber strands bundled together, and formed such that light emitted from the objective optical system (11) is incident on one end thereof, and the fiber strands are divided into two or more sub-bundles on the other end thereof for incidence onto the respective single fibers.

3. The measuring probe (41) according to claim 1, wherein the measuring probe is provided with the one single fiber (13C), and a plurality of the interference filters (13A, 14A, 15A) and a plurality of the light-receiving sensors (13B, 14B, 15B), and

the measuring probe further includes a bundle fiber (12a) which is composed of a plurality of fiber strands bundled together, and formed such that light emitted from the single fiber (13C) becomes incident on one end thereof, and the fiber strands are divided into two or more sub-bundles on the other end thereof for incidence onto the respective interference filters.

4. The measuring probe (40, 41, 42, 43) according to any one of claims 1 to 3, wherein the single fiber(s) (13C, 14C, 15C; 134C) has (have) a length equal to or greater than thirty times as large as a diameter of a respective core thereof.

5. The measuring probe (40, 41, 42, 43) according to claim 2 or claim 3, wherein

an optical adhesive or a resin is filled between the bundle fiber (12a) and the single fiber (13C, 14C, 15C).

6. The measuring probe (40, 41, 42, 43) according to claim 2 or claim 3, wherein

the bundle fiber (12a) and the single fiber (13C, 14C, 15C) are disposed with a gap (d) of a such a size that does not cause optical interference.

7. The measuring probe (42, 43) according to any one of claims 1 to 4, further comprising

a collecting lens (13D, 14D, 15D) which is provided on an inlet end side or on an exit end side of the single fiber (13C, 14C, 15C).

8. A luminance meter (1) comprising the measuring probe (40, 41, 42, 43, 44) according to any one of claims 1 to 7.

9. A color luminance meter (1) comprising the measuring probe (40, 41, 42, 43, 44) according to any one of claims 1 to 7.

10. A colorimeter comprising the measuring probe (40, 41, 42, 43, 44) according to any one of claims 1 to 7.

**Patentansprüche**

1. Messsonde (40, 41, 42, 43, 44), umfassend:

ein optisches Objektivsystem (11, 114) zum Empfangen eines Lichtstrahls von einem Messobjekt (3),

ein Interferenzfilter (13A, 14A, 15A; 134A), das ein vorbestimmtes Durchlässigkeitskennzeichen aufweist,

einen Lichtempfangssensor (13B, 14B, 15B; 134B) und

eine einzelne Faser (13C, 14C, 15C; 134C), die zwischen dem optischen Objektivsystem und dem Interferenzfilter angeordnet ist, wobei die einzelne Faser aus einem einzelnen Faserstrang gebildet ist, wobei

die Messsonde derart konfiguriert ist, dass es dem Lichtstrahl ermöglicht ist, durch das Interferenzfilter (13A, 14A, 15A; 134A) übertragen zu werden, und es ihm dann ermöglicht ist, auf den Lichtempfangssensor (13B, 14B, 15B; 134B) zum Erhalten einer Intensität des Lichtstrahls einzufallen, wobei

der Lichtstrahl aus einer Ausgangsseite der einzelnen Faser (13C, 14C, 15C; 134C) mit einer vorbestimmten Leuchtintensitätsverteilung und in einem vereinheitlichten Zustand abgegeben wird, unabhängig von Positionsinformation oder Winkelinformation über das Messobjekt (3), wobei der Lichtstrahl auf das Interferenzfilter (13A, 14A, 15A; 134A) mit einer vorbestimmten Leuchtintensitätsverteilung als eine Einfallswinkelfunktion in einem Bereich von Einfallswinkeln einfällt,

wobei die Divergenz des Lichtstrahls, der auf das Interferenzfilter einfällt, auf 15 Grad oder mehr bezüglich einer Normallinie zum Interferenzfilter eingestellt ist, und

wobei das vorbestimmte Durchlässigkeitskennzeichen des Interferenzfilters (13A, 14A, 15A; 134A) unter Berücksichtigung der vorbestimmten Leuchtintensitätsverteilung als eine Einfallswinkelfunktion des Lichtstrahls, der auf das Interferenzfilter einfällt, eingestellt ist, sodass sich die Lichtempfangsempfindlichkeit der Messsonde am Lichtempfangssensor an eine gewünschte Farbübereinstimmungsfunktion (13B, 14B, 15B; 134B) annähert.

2. Messsonde (40, 42, 43) nach Anspruch 1, wobei die Messsonde mit einer Vielzahl der einzelnen Fasern (13C, 14C, 15C), einer Vielzahl der Interferenzfilter (13A, 14A, 15A) und einer Vielzahl der Lichtempfangssensoren (13B, 14B, 15B) versehen ist, und

die Messsonde weiter eine Bündelfaser (12a) enthält, die aus einer Vielzahl von zusammengebündelten Fasersträngen gebildet ist und derart ausgebildet ist, dass Licht, das vom optischen Objektivsystem (11) ausgesendet wird, auf einem Ende davon einfällt und die Faserstränge in zwei oder mehr Teilbündel am anderen Ende davon für den Einfall auf die jeweiligen einzelnen Fasern aufgeteilt sind.

3. Messsonde (41) nach Anspruch 1, wobei die Messsonde mit der einzelnen Faser (13C) und einer Vielzahl der Interferenzfilter (13A, 14A, 15A) und einer Vielzahl der Lichtempfangssensoren (13B, 14B, 15B) versehen ist, und

die Messsonde weiter eine Bündelfaser (12a) enthält, die aus einer Vielzahl von zusammengebündelten Fasersträngen gebildet ist und derart ausgebildet ist, dass Licht, das von der einzelnen Faser (13C) ausgesendet wird, auf einem Ende davon einfällt und die Faserstränge in zwei oder mehr Teilbündel am anderen Ende davon für den Einfall auf die jeweiligen Interferenzfilter aufgeteilt sind.

4. Messsonde (40, 41, 42, 43) nach einem der Ansprüche 1 bis 3, wobei die einzelne(n) Faser(n) (13C, 14C, 15C; 134C) eine Länge aufweist (aufweisen), die gleich dem oder größer als das Dreißigfache eines Durchmessers eines jeweiligen Kerns davon ist.

5. Messsonde (40, 41, 42, 43) nach einem der Ansprüche 2 oder 3, wobei ein optischer Haftstoff oder ein Harz zwischen die Bündelfaser (12a) und die einzelne Faser (13C, 14C, 15C) eingefüllt ist.

6. Messsonde (40, 41, 42, 43) nach einem der Ansprüche 2 oder 3, wobei die Bündelfaser (12a) und die einzelne Faser (13C, 14C, 15C) mit einem Spalt (d) mit einer derartigen Größe, die keine optische Interferenz verursacht, angeordnet sind.

7. Messsonde (42, 43) nach einem der Ansprüche 1 bis 4, weiter umfassend eine Sammellinse (13D, 14D, 15D), die an einer Einlassendenseite oder einer Ausgangsendenseite der einzelnen Faser (13C, 14C, 15C) vorgesehen ist.

8. Luminanzmessgerät (1), umfassend die Messsonde (40, 41, 42, 43, 44) nach einem der Ansprüche 1 bis 7.

9. Farbluminanzmessgerät (1), umfassend die Messsonde (40, 41, 42, 43, 44) nach einem der Ansprüche 1 bis 7.

10. Farbmessgerät, umfassend die Messsonde (40, 41, 42, 43, 44) nach einem der Ansprüche 1 bis 7.


**Revendications**

1. Sonde de mesure (40, 41, 42, 43, 44) comprenant :

un système optique d'objectif (11, 114) pour recevoir un faisceau lumineux depuis un objet de mesure (3),
un filtre d'interférence (13A, 14A, 15A ; 134A) ayant une caractéristique de transmittance prédéterminée,
un capteur photorécepteur (13B, 14B, 15B ; 134B), et
une fibre unique (13C, 14C, 15C; 134C) qui est interposée entre le système optique d'objectif et le filtre d'interférence, la fibre unique étant constituée d'un brin de fibre unique, dans laquelle
la sonde de mesure est configurée de manière à ce que le faisceau lumineux puisse être transmis à travers le filtre d'interférence (13A, 14A, 15A ; 134A), puis puisse être incident sur le capteur photorécepteur (13B, 14B, 15B ; 134B) pour obtenir une intensité du faisceau lumineux, dans laquelle
le faisceau lumineux est émis depuis une face de sortie de la fibre unique (13C, 14C, 15C ; 134C) avec une répartition d'intensité lumineuse prédéterminée et dans un état uniformisé indépendamment des informations de position ou des informations d'angle relatives à l'objet de mesure (3),

le faisceau lumineux est incident sur le filtre d'interférence (13A, 14A, 15A ; 134A) avec une répartition d'intensité lumineuse prédéterminée en fonction de l'angle d'incidence dans une plage d'angles d'incidence,

la divergence du faisceau lumineux incident sur le filtre d'interférence est réglée à 15 degrés ou plus par rapport à une ligne normale du filtre d'interférence, et

la caractéristique de transmittance prédéterminée du filtre d'interférence (13A, 14A, 15A; 134A) est réglée en tenant compte de la répartition d'intensité lumineuse prédéterminée en fonction de l'angle d'incidence du faisceau lumineux incident sur le filtre d'interférence, de sorte que la sensibilité de photoréception de la sonde de mesure au niveau du capteur photorécepteur se rapproche d'une fonction de correspondance de couleurs souhaitée (13B, 14B, 15B ; 134B).

2. Sonde de mesure (40, 42, 43) selon la revendication 1, dans laquelle
la sonde de mesure est pourvue d'une pluralité de fibres uniques (13C, 14C, 15C), d'une pluralité de filtres d'interférence (13A, 14A, 15A) et d'une pluralité de capteurs photorécepteurs (13B, 14B, 15B), et
la sonde de mesure inclut en outre une fibre en faisceau (12a) qui est composée d'une pluralité de brins de fibre regroupés ensemble en faisceau, et formée de manière à ce que la lumière émise par le système optique d'objectif (11) soit incidente sur une extrémité de celle-ci, et que les brins de fibre soient divisés en deux sous-faisceaux ou plus à l'autre extrémité de celle-ci pour une incidence sur les fibres uniques respectives.

3. Sonde de mesure (41) selon la revendication 1, dans laquelle
la sonde de mesure est pourvue de l'une fibre unique (13C), et d'une pluralité de filtres d'interférence (13A, 14A, 15A) et d'une pluralité de capteurs photorécepteurs (13B, 14B, 15B), et
la sonde de mesure inclut en outre une fibre en faisceau (12a) qui est composée d'une pluralité de brins de fibres regroupés ensemble, et formée de manière à ce que la lumière émise par la fibre unique (13C) devienne incidente sur une extrémité de celle-ci, et que les brins de fibre soient divisés en deux sous-faisceaux ou plus à l'autre extrémité de celle-ci pour une incidence sur les filtres d'interférence respectifs.

4. Sonde de mesure (40, 41, 42, 43, 44) selon l'une quelconque des revendications 1 à 3, dans laquelle la ou les fibres uniques (13C, 14C, 15C; 134C) a (ont) une longueur égale ou supérieure à trente fois un diamètre d'une âme respective de celle(s)-ci.

5. Sonde de mesure (40, 41, 42, 43) selon la revendication 2 ou la revendication 3, dans laquelle un adhésif optique ou une résine est introduit entre la fibre en faisceau (12a) et la fibre unique (13C, 14C, 15C).

6. Sonde de mesure (40, 41, 42, 43) selon la revendication 2 ou la revendication 3, dans laquelle la fibre en faisceau (12a) et la fibre unique (13C, 14C, 15C) sont disposées avec un intervalle (d) d'une taille telle qu'elle ne provoque pas d'interférence optique.

7. Sonde de mesure (42, 43) selon l'une quelconque des revendications 1 à 4, comprenant en outre une lentille collectrice (13D, 14D, 15D) qui est prévue sur un côté d'extrémité d'entrée ou sur un côté d'extrémité de sortie de la fibre unique (13C, 14C, 15C).

8. Dispositif de mesure de luminance (1) comprenant la sonde de mesure (40, 41, 42, 43, 44) selon l'une quelconque des revendications 1 à 7.

9. Dispositif de mesure de luminance et de couleur (1) comprenant la sonde de mesure (40, 41, 42, 43, 44) selon l'une quelconque des revendications 1 à 7.

10. Colorimètre comprenant la sonde de mesure (40, 41, 42, 43, 44) selon l'une quelconque des revendications 1 à 7.

# FIG. 1

# FIG. 2

# FIG. 3

## FIG. 4A

OBJECTIVE LENS 11a
FOCAL LENGTH=50mm

MEASUREMENT SIZE:
$\phi$ 27

INLET DIAMETER OF FIBER
$\phi$ 4mm

DISTANCE=30mm

50mm

## FIG. 4B

11a
FOCAL LENGTH=15mm

Fi1

MEASUREMENT SIZE:
$\phi$ 4mm

S1→
S2→
S3→

Fin

MEASUREMENT PLANE

30mm

30mm

EP 2 570 785 B1

# FIG. 5

MEASUREMENT
PLANE

11

12

13C

13D

SINGLE
FIBER

SINGLE
FIBER — 14C

SINGLE
FIBER — 15C

LUMINANCE
METER

LUMINANCE
METER

30

EP 2 570 785 B1

FIG. 6

FIG. 7

## FIG. 8A

INTENSITY DISTRIBUTION →

INCIDENT ANGLE [deg]

DESIGN VALUE

1-DEGREE INCLINATION

## FIG. 8B

INTENSITY DISTRIBUTION →

INCIDENT ANGLE [deg]

DESIGN VALUE

1-DEGREE INCLINATION

24

# FIG. 9A

WAVELENGTH [nm]

# FIG. 9B

WAVELENGTH [nm]

# FIG. 10

# FIG. 11

FIG. 12

12a          13C,14C,15C

SINGLE FIBER

d

# FIG. 13

EP 2 570 785 B1

## FIG. 14

# FIG. 15

EP 2 570 785 B1

# FIG. 16

FIG. 17

# FIG. 18

4"

11"

MEASUREMENT
PLANE

11a

11b   13d   13e

S1→
S2→
S3→

COLOR FILTER

LIGHT-RECEIVING SENSOR

# FIG. 19A

```
LIGHT ──3──► ┌──────────┐ ┌──────────┐ ┌────────────────────────┐
             │ OBJECTIVE│11│ SPLITTING│12│ COLORIMETRIC           │─13
             │ OPTICAL  │  │ OPTICAL  │  │ OPTICAL SYSTEM a       │
             │ SYSTEM   │  │ SYSTEM   │  ├────────────────────────┤
             │          │  │          │  │ COLORIMETRIC           │─14
             │          │  │          │  │ OPTICAL SYSTEM b       │
             │          │  │          │  ├────────────────────────┤
             │          │  │          │  │ COLORIMETRIC           │─15
             │          │  │          │  │ OPTICAL SYSTEM c       │
             └──────────┘ └──────────┘ └────────────────────────┘
```

4

# FIG. 19B

EMITTING LIGHT

MEASURING OBJECT

REFLECTED LIGHT

ILLUMINATION OPTICAL SYSTEM  17

LAMP  16

OBJECTIVE OPTICAL SYSTEM  11

SPLITTING OPTICAL SYSTEM  12

COLORIMETRIC OPTICAL SYSTEM a  13

COLORIMETRIC OPTICAL SYSTEM b  14

COLORIMETRIC OPTICAL SYSTEM c  15

4

EP 2 570 785 B1

# FIG. 20

EP 2 570 785 B1

FIG. 21

# FIG. 22

# FIG. 23

MEASUREMENT
AREA A1

MEASUREMENT
AREA A2

FIG. 24

# FIG. 25

# FIG. 26

LIGHT-RECEIVING SENSOR b

COLOR FILTER a

EXIT END OF
BUNDLE FIBER

Foa1

θ

θ

Foa2

Foa3

Foam

DISTANCE
A

FILTER
THICKNESS

DISTANCE
B

DISTANCE
BETWEEN OUTER
SURFACE AND CELL
OF SENSOR

# FIG. 27

COLLECTING LENS 19

COLOR FILTER a

LIGHT-RECEIVING SENSOR b

EXIT END OF
BUNDLE FIBER

Foa1
Foa2
Foa3

Foam

CELL
SURFACE

# FIG. 28

COLLECTING LENS 19

COLOR FILTER a

LIGHT-RECEIVING SENSOR b

EXIT END OF
BUNDLE FIBER

Foa1
Foa2
Foa3

Foam

CELL
SURFACE

EP 2 570 785 B1

FIG. 29A

FIG. 29B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003247891 A
- JP 2010002255 A
- US 6246479 B1
- JP 2010112186 A